(19) Europäisches Patentamt
European Patent Office
Office européen des brevets

(11) **EP 4 513 989 A1**

(12) **EUROPEAN PATENT APPLICATION**
published in accordance with Art. 153(4) EPC

(43) Date of publication:
**26.02.2025 Bulletin 2025/09**

(21) Application number: 23792133.3

(22) Date of filing: **18.04.2023**

(51) International Patent Classification (IPC):
*H04W 52/36* (2009.01)    *H04W 52/28* (2009.01)
*H04W 8/24* (2009.01)    *H04W 72/23* (2023.01)
*H04L 5/00* (2006.01)

(52) Cooperative Patent Classification (CPC):
**H04L 5/00; H04W 8/24; H04W 52/28; H04W 52/36; H04W 72/23**

(86) International application number:
**PCT/KR2023/005202**

(87) International publication number:
**WO 2023/204557 (26.10.2023 Gazette 2023/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.04.2022  US 202263331888 P**
**18.05.2022  US 202263343102 P**

(71) Applicant: **LG Electronics Inc.**
**Yeongdeungpo-gu**
**Seoul 07336 (KR)**

(72) Inventors:
• **YANG, Yoonoh**
**Seoul 06772 (KR)**
• **LEE, Sangwook**
**Seoul 06772 (KR)**
• **HWANG, Jinyup**
**Seoul 06772 (KR)**
• **PARK, Jinwoong**
**Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54)    **RF REQUIREMENTS**

(57)    A disclosure of the present specification provides a UE which performs communication. The UE comprises: at least one processor; and at least one memory in which instructions are stored and which can be operatively electrically connected to the at least one processor. Operations performed on the basis of execution of the instructions by the at least one processor comprise the step of transmitting a signal on the basis of NR operating band n259.

## FIG. 8

Transmit signal — S801

Receive signal — S802

Processed by Luminess, 75001 PARIS (FR)

EP 4 513 989 A1

**Description**

**TECHNICAL FIELD**

The present disclosure relates to a radio communication.

**BACKGROUND ART**

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

According to the prior art, among the FR2 (Frequency Range 2: 24250 MHz to 71000 MHz, FR2-1: 24250 MHz to 52600 MHz, FR2-2: 52600 MHz to 71000 MHz) bands, the problem is that the 39 GHz band of the FR2-1 band is not defined for vehicular UEs.

**DISCLOSURE**

**TECHNICAL SOLUTION**

In one aspect, a UE for performing a communication is provided. The UE includes one or more processors; and one or more memories storing instructions and operably electrically coupled to the one or more processors, wherein the instructions are executed by the one or more processors, and based on the instructions being executed by the one or more processors, wherein the operations being performed comprising: transmitting a signal based on NR operating band n259, wherein a minimum peak EIRP for the NR operating band n259 is 25 dBm.

In another aspect, a method, performed by the UE, for performing communication provided.

In one aspect, a UE for performing a communication is provided. The UE includes one or more processors; and one or more memories storing instructions and operably electrically coupled to the one or more processors, wherein the instructions are executed by the one or more processors, and based on the instructions being executed by the one or more processors, wherein the operations being performed comprising: receiving a signal based on NR operating band n259, wherein a reference sensitivity for the NR operating band n259 is -88.7 dBm for a CBW of 50 MHz, -85.7 dBm for a CBW of 100 MHz, -82.7 dBm for a CBW of 200 MHz, and -79.7 dBm for a CBW of 400 MHz.

In another aspect, a method, performed by the UE, for performing communication provided.

In one aspect, a method for a base station to perform communications is provided. The method includes: receiving, from a UE, capability information including information related to power class 2 and/or information about whether the UE supports CA, and, based on the capability information, transmitting configuration related to communication based on NR operating band n259 and/or CA based on NR operating band n257 and the NR operating band n259 to the UE.

In another aspect, an apparatus implementing the above method is provided.

**BRIEF DESCRIPTION OF THE DRAWINGS**

FIG. 1 shows an example of a communication system to which implementations of the present disclosure is applied.
FIG. 2 shows an example of wireless devices to which implementations of the present disclosure is applied.
FIG. 3 shows an example of a wireless device to which implementations of the present disclosure is applied.
FIG. 4 is a diagram showing an example of a communication structure that can be provided in a 6G system.

FIG. 5 shows an example of an electromagnetic spectrum.

FIG. 6 illustrates an example of antenna gain for an NR FR2-1 PC2 in the operating band n259, according to one embodiment of the present disclosure.

FIG. 7 is an example of common spherical coverage in the case of PC2 CA_n257-n259, according to one embodiment of the present disclosure.

FIG. 8 illustrates an example of the behavior of a UE according to one embodiment of the present disclosure.

FIG. 9 illustrates an example of the behavior of a UE and an example of the operation of a base station, according to one embodiment of the present disclosure.

**MODE FOR INVENTION**

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regard to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein may be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

Although a user equipment (UE) is illustrated by way of example in the accompanying drawings, the illustrated UE may be referred to as a terminal, mobile equipment (ME), and the like. In addition, the UE may be a portable device such as a notebook computer, a mobile phone, a PDA, a smartphone, and a multimedia device or may be a non-portable device such as a PC or a vehicle-mounted device.

Hereinafter, a UE is used as an example of a wireless communication device (or a wireless device or wireless equipment) capable of wireless communication. An operation performed by a UE may be performed by a wireless communication device. A wireless communication device may also be referred to as a wireless device, wireless equipment, or the like. Hereinafter, AMF may mean an AMF node, SMF may mean an SMF node, and UPF may mean a UPF node.

A base station used below generally refers to a fixed station communicating with a wireless device and may also be referred as an evolved-NodeB (eNodeB), an evolved-NodeB (eNB), a base transceiver system (BTS), an access point, and a next generation NodeB (gNB).

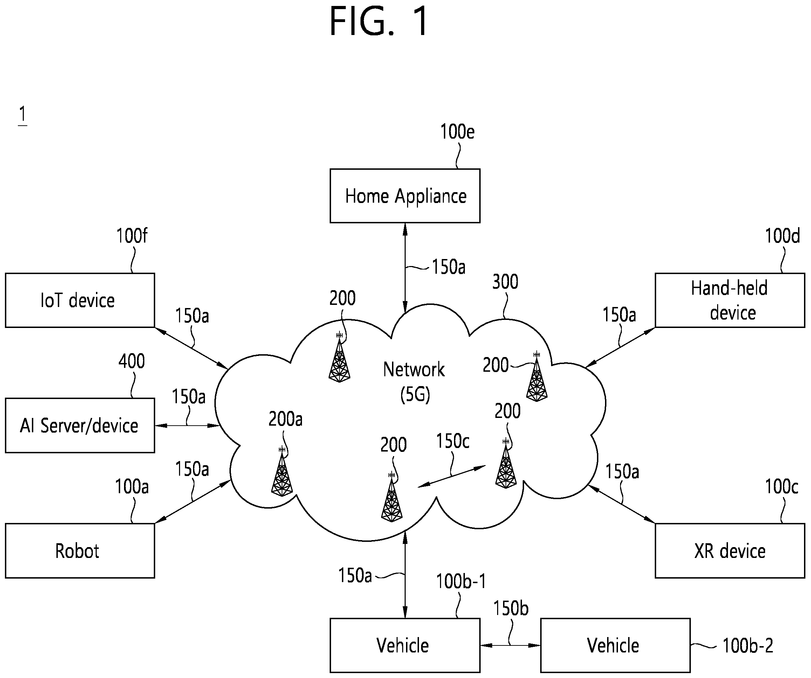

FIG. 1 shows an example of a communication system to which implementations of the present disclosure is applied.

The 5G usage scenarios shown in FIG. 1 are only exemplary, and the technical features of the present disclosure may be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Partial use cases may require a plurality of categories for optimization and other use cases may focus only upon one key performance indicator (KPI). 5G supports such various use cases using a flexible and reliable method.

eMBB far surpasses basic mobile Internet access and covers abundant bidirectional work and media and entertainment applications in cloud and augmented reality. Data is one of 5G core motive forces and, in a 5G era, a dedicated voice service may not be provided for the first time. In 5G, it is expected that voice will be simply processed as an application program using data connection provided by a communication system. Main causes for increased traffic volume are due to an increase in the size of content and an increase in the number of applications requiring high data transmission rate. A streaming service (of audio and video), conversational video, and mobile Internet access will be more widely used as more devices are connected to the Internet. These many application programs require connectivity of an always turned-on state in order to push real-time information and alarm for users. Cloud storage and applications are rapidly increasing in a mobile communication platform and may be applied to both work and entertainment. The cloud storage is a special use case which accelerates growth of uplink data transmission rate. 5G is also used for remote work of cloud. When a tactile interface is used, 5G demands much lower end-to-end latency to maintain user good experience. Entertainment, for example, cloud gaming and video streaming, is another core element which increases demand for mobile broadband capability. Entertainment is essential for a smartphone and a tablet in any place including high mobility environments such as a train, a vehicle, and an airplane. Other use cases are augmented reality for entertainment and information search. In this case, the augmented reality requires very low latency and instantaneous data volume.

In addition, one of the most expected 5G use cases relates a function capable of smoothly connecting embedded sensors in all fields, i.e., mMTC. It is expected that the number of potential Internet-of-things (IoT) devices will reach 204 hundred million up to the year of 2020. An industrial IoT is one of categories of performing a main role enabling a smart city, asset tracking, smart utility, agriculture, and security infrastructure through 5G.

URLLC includes a new service that will change industry through remote control of main infrastructure and an ultra-reliable/available low-latency link such as a self-driving vehicle. A level of reliability and latency is essential to control a smart grid, automatize industry, achieve robotics, and control and adjust a drone.

5G is a means of providing streaming evaluated as a few hundred megabits per second to gigabits per second and may complement fiber-to-the-home (FTTH) and cable-based broadband (or DOCSIS). Such fast speed is needed to deliver TV in resolution of 4K or more (6K, 8K, and more), as well as virtual reality and augmented reality. Virtual reality (VR) and augmented reality (AR) applications include almost immersive sports games. A specific application program may require a special network configuration. For example, for VR games, gaming companies need to incorporate a core server into an edge network server of a network operator in order to minimize latency.

Automotive is expected to be a new important motivated force in 5G together with many use cases for mobile communication for vehicles. For example, entertainment for passengers requires high simultaneous capacity and mobile broadband with high mobility. This is because future users continue to expect connection of high quality regardless of their locations and speeds. Another use case of an automotive field is an AR dashboard. The AR dashboard causes a driver to identify an object in the dark in addition to an object seen from a front window and displays a distance from the object and a movement of the object by overlapping information talking to the driver. In the future, a wireless module enables communication between vehicles, information exchange between a vehicle and supporting infrastructure, and information exchange between a vehicle and other connected devices (e.g., devices accompanied by a pedestrian). A safety system guides alternative courses of a behavior so that a driver may drive more safely drive, thereby lowering the danger of an accident. The next stage will be a remotely controlled or self-driven vehicle. This requires very high reliability and very fast communication between different self-driven vehicles and between a vehicle and infrastructure. In the future, a self-driven vehicle will perform all driving activities and a driver will focus only upon abnormal traffic that the vehicle cannot identify. Technical requirements of a self-driven vehicle demand ultra-low latency and ultra-high reliability so that traffic safety is increased to a level that cannot be achieved by human being.

A smart city and a smart home/building mentioned as a smart society will be embedded in a high-density wireless sensor network. A distributed network of an intelligent sensor will identify conditions for costs and energy-efficient maintenance of a city or a home. Similar configurations may be performed for respective households. All of temperature sensors, window and heating controllers, burglar alarms, and home appliances are wirelessly connected. Many of these sensors are typically low in data transmission rate, power, and cost. However, real-time HD video may be demanded by a specific type of device to perform monitoring.

Consumption and distribution of energy including heat or gas is distributed at a higher level so that automated control of the distribution sensor network is demanded. The smart grid collects information and connects the sensors to each other using digital information and communication technology so as to act according to the collected information. Since this information may include behaviors of a supply company and a consumer, the smart grid may improve distribution of fuels such as electricity by a method having efficiency, reliability, economic feasibility, production sustainability, and automation. The smart grid may also be regarded as another sensor network having low latency.

Mission critical application (e.g., e-health) is one of 5G use scenarios. A health part contains many application programs capable of enjoying benefit of mobile communication. A communication system may support remote treatment that provides clinical treatment in a faraway place. Remote treatment may aid in reducing a barrier against distance and improve access to medical services that cannot be continuously available in a faraway rural area. Remote treatment is also used to perform important treatment and save lives in an emergency situation. The wireless sensor network based on mobile communication may provide remote monitoring and sensors for parameters such as heart rate and blood pressure.

Wireless and mobile communication gradually becomes important in the field of an industrial application. Wiring is high in installation and maintenance cost. Therefore, a possibility of replacing a cable with re-constructible wireless links is an attractive opportunity in many industrial fields. However, in order to achieve this replacement, it is necessary for wireless connection to be established with latency, reliability, and capacity similar to those of the cable and management of wireless connection needs to be simplified. Low latency and a very low error probability are new requirements when connection to 5G is needed.

Logistics and freight tracking are important use cases for mobile communication that enables inventory and package tracking anywhere using a location-based information system. The use cases of logistics and freight typically demand low data rate but require location information with a wide range and reliability.

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and may be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that may create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions may be called intelligent robots. Robots may be classified as industrial, medical, home, military, etc., depending on the purpose or area of use. The robot may perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles may be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area may be supported in traditional cellular bands, and if SCS is 30 kHz/60 kHz, dense-urban, lower latency, and wider carrier bandwidth may be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW). FR2 may include FR 2-1 and FR 2-2, as shown in the examples in Table 1 and Table 2.

[Table 1]

| Frequency Range designation | | Corresponding frequency range | Subcarrier Spacing |
|---|---|---|---|
| FR1 | | 450MHz - 6000MHz | 15, 30, 60kHz |
| FR2 | FR2-1 | 24250MHz - 52600MHz | 60, 120, 240kHz |
| | FR2-2 | 57000MHz - 71000MHz | 120, 480, 960kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

[Table 2]

| Frequency Range designation | | Corresponding frequency range | Subcarrier Spacing |
|---|---|---|---|
| FR1 | | 410MHz - 7125MHz | 15, 30, 60kHz |
| FR2 | FR2-1 | 24250MHz - 52600MHz | 60, 120, 240kHz |
| | FR2-2 | 57000MHz - 71000MHz | 120, 480, 960kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally, and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally, and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

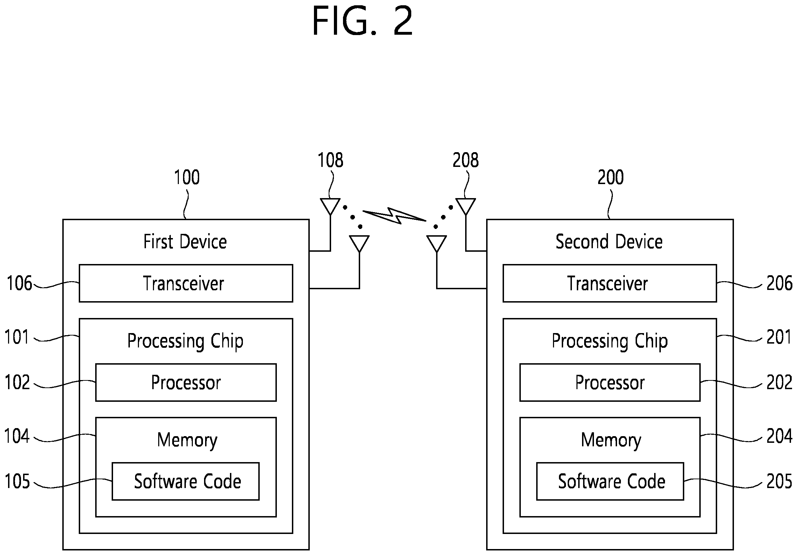

**FIG. 2 shows an example of wireless devices to which implementations of the present disclosure is applied.**

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be configured to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and downconvert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

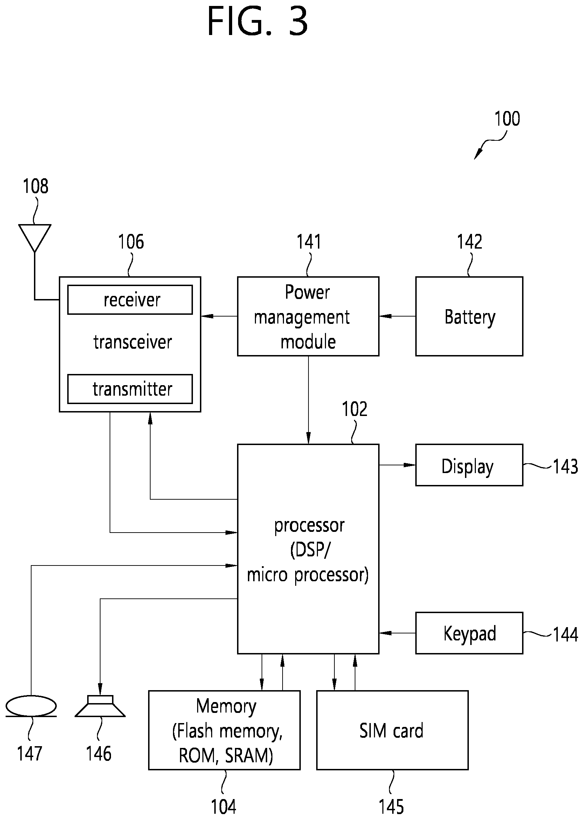

FIG. 3 shows an example of a wireless device to which implementations of the present disclosure is applied.

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

<Operating bands of NR>.

The operating bands in NR are as follows

The operating bands in Table 3 below are the refarmed operating bands from the operating bands of LTE/LTE-A. This is referred to as the FR1 band.

[Table 3]

| NR operating bands | Uplink (UL) operating band $F_{UL\_low}$ - $F_{UL\_high}$ | Downlink(DL) operating band $F_{DL\_low}$ - $F_{DL\_high}$ | Duplex Mode |
|---|---|---|---|
| n1 | 1920 MHz - 1980 MHz | 2110 MHz - 2170 MHz | FDD |
| n2 | 1850 MHz - 1910 MHz | 1930 MHz - 1990 MHz | FDD |
| n3 | 1710 MHz - 1785 MHz | 1805 MHz - 1880 MHz | FDD |
| n5 | 824 MHz - 849 MHz | 869 MHz - 894 MHz | FDD |
| n7 | 2500 MHz - 2570 MHz | 2620 MHz - 2690 MHz | FDD |
| n8 | 880 MHz - 915 MHz | 925 MHz - 960 MHz | FDD |
| n12 | 699 MHz - 716 MHz | 729 MHz - 746 MHz | FDD |
| n20 | 832 MHz - 862 MHz | 791 MHz - 821 MHz | FDD |
| n25 | 1850 MHz - 1915 MHz | 1930 MHz - 1995 MHz | FDD |
| n28 | 703 MHz - 748 MHz | 758 MHz - 803 MHz | FDD |
| n34 | 2010 MHz - 2025 MHz | 2010 MHz - 2025 MHz | TDD |
| n38 | 2570 MHz - 2620 MHz | 2570 MHz - 2620 MHz | TDD |
| n39 | 1880 MHz - 1920 MHz | 1880 MHz - 1920 MHz | TDD |
| n40 | 2300 MHz - 2400 MHz | 2300 MHz - 2400 MHz | TDD |
| n41 | 2496 MHz - 2690 MHz | 2496 MHz - 2690 MHz | TDD |
| n50 | 1432 MHz - 1517 MHz | 1432 MHz - 1517 MHz | TDD1 |
| n51 | 1427 MHz - 1432 MHz | 1427 MHz - 1432 MHz | TDD |
| n66 | 1710 MHz - 1780 MHz | 2110 MHz - 2200 MHz | FDD |
| n70 | 1695 MHz - 1710 MHz | 1995 MHz - 2020 MHz | FDD |
| n71 | 663 MHz - 698 MHz | 617 MHz - 652 MHz | FDD |
| n74 | 1427 MHz - 1470 MHz | 1475 MHz - 1518 MHz | FDD |
| n75 | N/A | 1432 MHz - 1517 MHz | SDL |
| n76 | N/A | 1427 MHz - 1432 MHz | SDL |
| n77 | 3300 MHz - 4200 MHz | 3300 MHz - 4200 MHz | TDD |
| n78 | 3300 MHz - 3800 MHz | 3300 MHz - 3800 MHz | TDD |
| n79 | 4400 MHz - 5000 MHz | 4400 MHz - 5000 MHz | TDD |
| n80 | 1710 MHz - 1785 MHz | N/A | SUL |
| n81 | 880 MHz - 915 MHz | N/A | SUL |
| n82 | 832 MHz - 862 MHz | N/A | SUL |
| n83 | 703 MHz - 748 MHz | N/A | SUL |
| n84 | 1920 MHz - 1980 MHz | N/A | SUL |
| n86 | 1710 MHz - 1780 MHz | N/A | SUL |

The table below shows the NR operating band defined at high frequencies. This is called the FR2 band.

[Table 4]

| NR Operating band | Uplink (UL) operating band | Downlink(DL) operating band | Duplex Mode |
|---|---|---|---|
| | $F_{UL\_low}$ - $F_{UL\_high}$ | $F_{DL\_low}$ - $F_{DL\_high}$ | |
| n257 | 26500 MHz - 29500 MHz | 26500 MHz - 29500 MHz | TDD |
| n258 | 24250 MHz - 27500 MHz | 24250 MHz - 27500 MHz | TDD |
| n259 | 37000 MHz - 40000 MHz | 37000 MHz - 40000 MHz | TDD |
| n260 | 37000 MHz - 40000 MHz | 37000 MHz - 40000 MHz | FDD |
| n261 | 27500 MHz - 28350 MHz | 27500 MHz - 28350 MHz | FDD |

<6G System General>

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as "intelligent connectivity", "deep connectivity", "holographic connectivity" and "ubiquitous connectivity", and the 6G system may satisfy the requirements shown in Table 4 below. That is, Table 4 shows the requirements of the 6G system.

[Table **5**]

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

The 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion and enhanced data security.

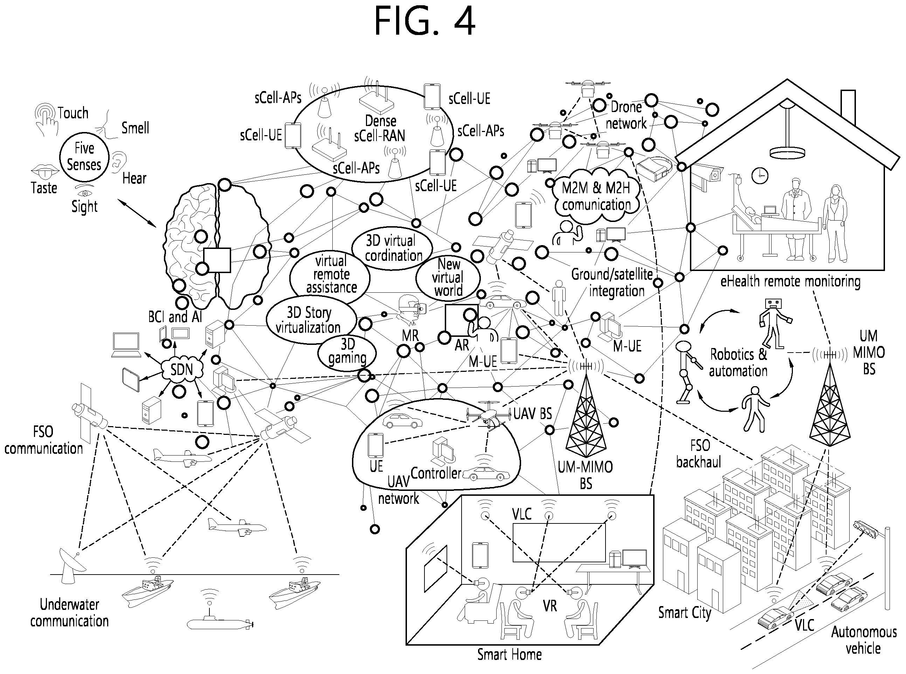

FIG. 4 is a diagram showing an example of a communication structure that can be provided in a 6G system.

The 6G system will have 50 times higher simultaneous wireless communication connectivity than a 5G wireless communication system. URLLC, which is the key feature of 5G, will become more important technology by providing end-to-end latency less than 1 ms in 6G communication. At this time, the 6G system may have much better volumetric spectrum efficiency unlike frequently used domain spectrum efficiency. The 6G system may provide advanced battery technology for energy harvesting and very long battery life and thus mobile devices may not need to be separately charged in the 6G system. In addition, in 6G, new network characteristics may be as follows.

- Satellites integrated network: To provide a global mobile group, 6G will be integrated with satellite. Integrating terrestrial waves, satellites and public networks as one wireless communication system may be very important for 6G.
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer: A 6G wireless network may transfer power in order to charge the batteries of devices such as smartphones and sensors. Therefore, wireless information and energy transfer (WIET) will be integrated.
- Ubiquitous super 3-dimemtion connectivity: Access to networks and core network functions of drones and very low earth orbit satellites will establish super 3D connection in 6G ubiquitous.

In the new network characteristics of 6G, several general requirements may be as follows.

- Small cell networks: The idea of a small cell network was introduced in order to improve received signal quality as a result of throughput, energy efficiency and spectrum efficiency improvement in a cellular system. As a result, the small cell network is an essential feature for 5G and beyond 5G (5GB) communication systems. Accordingly, the 6G communication system also employs the characteristics of the small cell network.
- Ultra-dense heterogeneous network: Ultra-dense heterogeneous networks will be another important characteristic of the 6G communication system. A multi-tier network composed of heterogeneous networks improves overall QoS and reduces costs.
- High-capacity backhaul: Backhaul connection is characterized by a high-capacity backhaul network in order to support high-capacity traffic. A high-speed optical fiber and free space optical (FSO) system may be a possible solution for this problem.
- Radar technology integrated with mobile technology: High-precision localization (or location-based service) through communication is one of the functions of the 6G wireless communication system. Accordingly, the radar system will be integrated with the 6G network.
- Softwarization and virtualization: Softwarization and virtualization are two important functions which are the bases of a design process in a 5GB network in order to ensure flexibility, reconfigurability and programmability.

**<Core implementation technology of 6G system>**

Artificial Intelligence

Technology which is most important in the 6G system and will be newly introduced is AI. AI was not involved in the 4G system. A 5G system will support partial or very limited AI. However, the 6G system will support AI for full automation. Advance in machine learning will create a more intelligent network for real-time communication in 6G. When AI is introduced to communication, real-time data transmission may be simplified and improved. AI may determine a method of performing complicated target tasks using countless analysis. That is, AI may increase efficiency and reduce processing delay.

Time-consuming tasks such as handover, network selection or resource scheduling may be immediately performed by using AI. AI may play an important role even in M2M, machine-to-human and human-to-machine communication. In addition, AI may be rapid communication in a brain computer interface (BCI). An AI based communication system may be supported by meta materials, intelligent structures, intelligent networks, intelligent devices, intelligent recognition radios, self-maintaining wireless networks and machine learning.

Recently, attempts have been made to integrate AI with a wireless communication system in the application layer or the network layer, but deep learning have been focused on the wireless resource management and allocation field. However, such studies are gradually developed to the MAC layer and the physical layer, and, particularly, attempts to combine deep learning in the physical layer with wireless transmission are emerging. AI-based physical layer transmission means applying a signal processing and communication mechanism based on an AI driver rather than a traditional communication framework in a fundamental signal processing and communication mechanism. For example, channel coding and decoding based on deep learning, signal estimation and detection based on deep learning, multiple input multiple output (MIMO) mechanisms based on deep learning, resource scheduling and allocation based on AI, etc. may be included.

Machine learning may be used for channel estimation and channel tracking and may be used for power allocation, interference cancellation, etc. in the physical layer of DL. In addition, machine learning may be used for antenna selection, power control, symbol detection, etc. in the MIMO system.

Machine learning refers to a series of operations to train a machine in order to create a machine which can perform tasks which cannot be performed or are difficult to be performed by people. Machine learning requires data and learning models. In machine learning, data learning methods may be roughly divided into three methods, that is, supervised learning, unsupervised learning and reinforcement learning.

Neural network learning is to minimize output error. Neural network learning refers to a process of repeatedly inputting training data to a neural network, calculating the error of the output and target of the neural network for the training data, backpropagating the error of the neural network from the output layer of the neural network to an input layer in order to reduce the error and updating the weight of each node of the neural network.

Supervised learning may use training data labeled with a correct answer and the unsupervised learning may use training data which is not labeled with a correct answer. That is, for example, in case of supervised learning for data classification, training data may be labeled with a category. The labeled training data may be input to the neural network, and the output (category) of the neural network may be compared with the label of the training data, thereby calculating the error. The calculated error is backpropagated from the neural network backward (that is, from the output layer to the input layer), and the connection weight of each node of each layer of the neural network may be updated according to backpropagation. Change in updated connection weight of each node may be determined according to the learning rate. Calculation of the neural network for input data and backpropagation of the error may configure a learning cycle (epoch). The learning data is differently applicable according to the number of repetitions of the learning cycle of the neural network. For example, in the early phase of learning of the neural network, a high learning rate may be used to increase efficiency such that the neural network rapidly ensures a certain level of performance and, in the late phase of learning, a low learning rate may be used to increase accuracy.

The learning method may vary according to the feature of data. For example, for the purpose of accurately predicting data transmitted from a transmitter in a receiver in a communication system, learning may be performed using supervised learning rather than unsupervised learning or reinforcement learning.

The learning model corresponds to the human brain and may be regarded as the most basic linear model. However, a paradigm of machine learning using a neural network structure having high complexity, such as artificial neural networks, as a learning model is referred to as deep learning.

Neural network cores used as a learning method may roughly include a deep neural network (DNN) method, a convolutional deep neural network (CNN) method, a recurrent Boltzmman machine (RNN) method and a spiking neural network (SNN). Such a learning model is applicable.

THz (Terahertz) Communication

A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF.

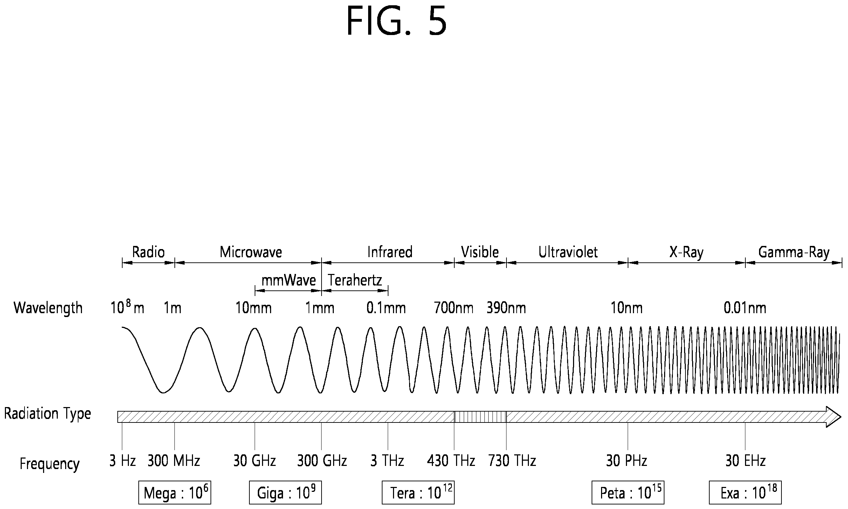

FIG. 5 shows an example of an electromagnetic spectrum.

The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.

Large-scale MIMO

One of core technologies for improving spectrum efficiency is MIMO technology. When MIMO technology is improved, spectrum efficiency is also improved. Accordingly, massive MIMO technology will be important in the 6G system. Since MIMO technology uses multiple paths, multiplexing technology and beam generation and management technology suitable for the THz band should be significantly considered such that data signals are transmitted through one or more paths.

Hologram Beamforming

Beamforming is a signal processing procedure that adjusts an antenna array to transmit radio signals in a specific direction. This is a subset of smart antennas or advanced antenna systems. Beamforming technology has several advantages, such as high signal-to-noise ratio, interference prevention and rejection, and high network efficiency. Hologram Beamforming (HBF) is a new beamforming method that differs significantly from MIMO systems because this uses a software-defined antenna. HBF will be a very effective approach for efficient and flexible transmission and reception of signals in multi-antenna communication devices in 6G.

Optical wireless technology

Optical wireless communication (OWC) is a form of optical communication that uses visible light, infrared light (IR), or ultraviolet light (UV) to carry signals. OWC operating in the visible light band (e.g., 390 to 750 nm) is commonly referred to as visible light communication (VLC). VLC implementations can utilize light-emitting diodes (LEDs). VLC can be used in a variety of applications, including wireless local area networks, wireless personal area networks, and vehicular networks.

VLC has several advantages over RF-based technologies. First, the spectrum occupied by VLC is free/-unlicensed and can provide extensive bandwidth (THz-level bandwidth). Second, VLC rarely causes significant interference to other electromagnetic devices; therefore, VLC can be applied in sensitive electromagnetic interference applications such as aircraft and hospitals. Third, VLC has strengths in communication security and privacy. The transmission medium of VLC-based networks, namely visible light, cannot pass through walls and other opaque obstacles. Therefore, the transmission range of VLC can be limited to indoors, which can protect users' privacy and sensitive information. Fourth, VLC can use any light source as a base station, eliminating the need for expensive base stations.

Free-space optical communication (FSO) is an optical communication technology that uses light propagating in free space, such as air, outer space, and vacuum, to wirelessly transmit data for telecommunications or computer networking. FSO can be used as a point-to-point OWC system on the ground. FSO can operate in the near-infrared frequency (750-1600 nm). Laser transmitters may be used in FSO implementations, and FSO can provide high data rates (e.g., 10 Gbit/s), providing a potential solution to backhaul bottlenecks.

These OWC technologies are planned for 6G communications in addition to RF-based communications for all possible device-to-access networks. These networks will access network-to-backhaul/fronthaul network connections. OWC technology has already been in use since 4G communication systems, but will be more widely used to meet the needs of 6G communication systems. OWC technologies such as light fidelity, visible light communication, optical camera communication, and FSO communication based on optical bands are already well-known technologies. Communication based on optical wireless technology can provide extremely high data rates, low latency, and secure communication.

Light Detection And Ranging (LiDAR) is also based on the optical band and can be utilized in 6G communications for ultra-high resolution 3D mapping. LiDAR is a remote sensing method that uses near-infrared, visible, and ultraviolet light to illuminate an object, and the reflected light is detected by a light sensor to measure distance. LiDAR can be used for fully automated driving of cars.

FSO Backhaul Network

The characteristics of the transmitter and receiver of the FSO system are similar to those of an optical fiber network. Accordingly, data transmission of the FSO system similar to that of the optical fiber system. Accordingly, FSO may be a good technology for providing backhaul connection in the 6G system along with the optical fiber network. When FSO is used, very long-distance communication is possible even at a distance of 10,000 km or more. FSO supports mass backhaul connections for remote and non-remote areas such as sea, space, underwater and isolated islands. FSO also supports cellular base station connections.

Non-Terrestrial Networks (NTN)

The 6G system will integrate terrestrial and aerial networks to support vertically expanding user communications. 3D BS will be delivered via low-orbit satellites and UAVs. Adding a new dimension in terms of altitude and associated degrees of freedom makes 3D connectivity quite different from traditional 2D networks. NR considers Non-Terrestrial Networks (NTNs) as one way to accomplish this. An NTN is a network or network segment that uses RF resources aboard a satellite (or UAS platform). There are two common scenarios for NTNs that provide access to user equipment: transparent payloads and regenerative payloads. The following are the basic elements of an NTN.

- One or more sat-gateways that connect the NTN to the public data network.
- GEO satellites are fed by one or several satellite gateways deployed across the satellite target range (e.g., regional or continental coverage). We assume that the UEs in a cell are served by only one sat-gateway.
- Non-GEO satellites that are continuously serviced by one or multiple satellite gateways at a time. The system ensures service and feeder link continuity between successively serviced satellite gateways with a time duration sufficient to allow for mobility anchoring and handover.
- The feeder link or radio link between the satellite gateway and the satellite (or UAS platform).
- The service link or radio link between the user equipment and the satellite (or UAS platform).
- A satellite (or UAS platform) that can implement transparent or regenerative (with onboard processing) payloads. Satellite (or UAS platform) generated beams typically produce multiple beams for a given service area, depending on the field of view. The footprint of the beam is typically elliptical. The field of view of the satellite (or UAS platform) depends on the onboard antenna diagram and the minimum angle of attack.

- Transparent payload: Radio frequency filtering, frequency conversion, and amplification, so the waveform signal repeated by the payload is unchanged.
- Regenerative payload: radio frequency filtering, frequency conversion and amplification, demodulation/decryption, switching and/or routing, and coding/modulation. This is effectively the same as having all or part of the base station functions (e.g., gNB) on board a satellite (or UAS platform).
- For satellite deployments, optionally an inter-satellite link (ISL). This requires a regenerative payload on the satellite. ISLs can operate at RF frequencies or in the optical band.
- User equipment is served by satellites (or UAS platforms) within the targeted coverage area.

Typically, GEO satellites and UAS are used to provide continental, regional, or local services.

Typically, constellations in LEO and MEO are used to provide coverage in both the Northern and Southern Hemispheres. In some cases, constellations can also provide global coverage, including polar regions. The latter requires proper orbital inclination, sufficient beams generated, and links between satellites.

Quantum Communication

Quantum communication is a next-generation communication technology that can overcome the limitations of conventional communication such as security and high-speed computation by applying quantum mechanical properties to the field of information and communication. Quantum communication provides a means of generating, transmitting, processing, and storing information that cannot be expressed in the form of 0s and 1s according to the binary bit information used in existing communication technologies. In conventional communication technologies, wavelengths or amplitudes are used to transmit information between the transmitting and receiving ends, but in quantum communication, photons, the smallest unit of light, are used to transmit information between the transmitting and receiving ends. In particular, in the case of quantum communication, quantum uncertainty and quantum irreversibility can be used for the polarization or phase difference of photons (light), so quantum communication has the characteristic of being able to communicate with perfect security. In addition, quantum communication can also enable ultra-high-speed communication using quantum entanglement under certain conditions.

Cell-free Communication

Tight integration of multiple frequencies and heterogeneous communication technologies is critical in 6G systems. As a result, users can seamlessly move from one network to another without having to create any manual configurations on their devices. The best network is automatically selected from the available communication technologies. This will break the limitations of the cell concept in wireless communication. Currently, user movement from one cell to other causes too many handovers in dense networks, resulting in handover failures, handover delays, data loss, and ping-pong effects. 6G cell-free communication will overcome all this and provide better QoS.

Cell-free communication is defined as "a system in which a large number of geographically distributed antennas (APs) cooperatively serve a small number of terminals using the same time/frequency resources with the help of a fronthaul network and a CPU". A single terminal is served by a set of multiple APs, which is called an AP cluster. There are several ways to form AP clusters, among which the method of configuring AP clusters with APs that can significantly contribute to improving the reception performance of the terminal is called the terminal-centered clustering method, and when using this method, the configuration is dynamically updated as the terminal moves. By adopting this device-centric AP clustering technique, the device is always at the center of the AP cluster and is therefore free from inter-cluster interference that can occur when the device is located at the boundary of the AP cluster. This cell-free communication will be achieved through multi-connectivity and multi-tier hybrid technologies and different heterogeneous radios in the device.

Integration of Wireless Information and Energy Transfer (WIET)

WIET uses the same field and wave as a wireless communication system. In particular, a sensor and a smartphone will be charged using wireless power transfer during communication. WIET is a promising technology for extending the life of battery charging wireless systems. Therefore, devices without batteries will be supported in 6G communication.

Integration of Wireless Communication and Sensing

An autonomous wireless network is a function for continuously detecting a dynamically changing environment state and exchanging information between different nodes. In 6G, sensing will be tightly integrated with communication to support autonomous systems.

### Integrated Access and Backhaul Network

In 6G, the density of access networks will be enormous. Each access network is connected by optical fiber and backhaul connection such as FSO network. To cope with a very large number of access networks, there will be a tight integration between the access and backhaul networks.

### Big Data Analysis

Big data analysis is a complex process for analyzing various large data sets or big data. This process finds information such as hidden data, unknown correlations, and customer disposition to ensure complete data management. Big data is collected from various sources such as video, social networks, images and sensors. This technology is widely used for processing massive data in the 6G system.

### Reconfigurable Intelligent Surface

There is a large body of research that considers the radio environment as a variable to be optimized along with the transmitter and receiver. The radio environment created by this approach is referred to as a Smart Radio Environment (SRE) or Intelligent Radio Environment (IRE) to highlight its fundamental differences from past design and optimization criteria. Various terms have been proposed for the reconfigurable intelligent antenna (or intelligent reconfigurable antenna technology) technology that enables SRE, including Reconfigurable Metasurfaces, Smart Large Intelligent Surfaces (SLIS), Large Intelligent Surfaces (LIS), Reconfigurable Intelligent Surface (RIS), and Intelligent Reflecting Surface (IRS).
In the case of THz band signals, there are many shadowed areas caused by obstacles due to the strong straightness of the signal, and RIS technology is important to expand the communication area by installing RIS near these shadowed areas, strengthening communication stability and enabling additional value-added services. RIS is an artificial surface made of electromagnetic materials that can alter the propagation of incoming and outgoing radio waves. While RIS can be seen as an extension of massive MIMO, it has a different array structure and operating mechanism than massive MIMO. RIS also has the advantage of lower power consumption because it operates as a reconfigurable reflector with passive elements, meaning it only passively reflects the signal without using an active RF chain. In addition, each of the passive reflectors in the RIS must independently adjust the phase shift of the incident signal, which can be advantageous for wireless communication channels. By properly adjusting the phase shift through the RIS controller, the reflected signal can be gathered at the target receiver to boost the received signal power.
In addition to reflecting radio signals, there are also RISs that can adjust transmission and refraction properties, and these RISs are mainly used for O2I (Outdoor to Indoor). Recently, STAR-RIS (Simultaneous Transmission and Reflection RIS), which provides transmission while reflecting, has also been actively researched.

### Metaverse

Metaverse is a portmanteau of the words "meta" meaning virtual, transcendent, and "universe" meaning space. Generally speaking, the metaverse is a three-dimensional virtual space where the same social and economic activities as in the real world are commonplace.
Extended Reality (XR), a key technology enabling the Metaverse, is the fusion of the virtual and the real, which can extend the experience of reality and provide a unique sense of immersion. The high bandwidth and low latency of 6G networks will enable users to experience more immersive virtual reality (VR) and augmented reality (AR) experiences.

### Autonomous Driving, Self-driving

For perfect autonomous driving, vehicles must communicate with each other to inform each other of dangerous situations, or with infrastructure such as parking lots and traffic lights to check information such as the location of parking information and signal change times. Vehicle-to-Everything (V2X), a key element in building an autonomous driving infrastructure, is a technology that enables vehicles to communicate and share information with various elements on the road, such as vehicle-to-vehicle (V2V) and vehicle-to-infrastructure (V2I), for autonomous driving.
In order to maximize the performance of autonomous driving and ensure high safety, fast transmission speeds and low latency technologies are essential. In addition, in the future, autonomous driving will go beyond delivering warnings and guidance messages to the driver to actively intervene in vehicle operation and directly control the vehicle in dangerous situations, and the amount of information that needs to be transmitted and received will be enormous, so 6G is expected to maximize autonomous driving with faster transmission speeds and lower latency than 5G.

Unmanned Aerial Vehicle (UAV)

An unmanned aerial vehicle (UAV) or drone will be an important factor in 6G wireless communication. In most cases, a high-speed data wireless connection is provided using UAV technology. A base station entity is installed in the UAV to provide cellular connectivity. UAVs have certain features, which are not found in fixed base station infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communications. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.

Block-chain

A blockchain will be important technology for managing large amounts of data in future communication systems. The blockchain is a form of distributed ledger technology, and distributed ledger is a database distributed across numerous nodes or computing devices. Each node duplicates and stores the same copy of the ledger. The blockchain is managed through a peer-to-peer (P2P) network. This may exist without being managed by a centralized institution or server. Blockchain data is collected together and organized into blocks. The blocks are connected to each other and protected using encryption. The blockchain completely complements large-scale IoT through improved interoperability, security, privacy, stability and scalability. Accordingly, the blockchain technology provides several functions such as interoperability between devices, high-capacity data traceability, autonomous interaction of different IoT systems, and large-scale connection stability of 6G communication systems.

<The present disclosure>

Among FR2 (Frequency Range 2: 24250 MHz to 71000 MHz, FR2-1: 24250 MHz to 52600 MHz, FR2-2: 52600 MHz to 71000 MHz) bands, the 39 GHz band of the FR2-1 band has not yet been defined for Vehicular UEs. In this context, the 39 GHz band may mean, for example, a band that includes frequencies in the vicinity of 39 GHz. For example, the 39 GHz band may be the NR operating bands n259, n260, etc. To support the 39 GHz band, RF performance requirements shall be defined for vehicular UEs supporting the n259 band. Once the n259 band is defined, RF performance requirements for vehicular UEs supporting inter-band Carrier Aggregation (CA) with n257+n259 may also be defined.

UE Radio Frequency (RF) requirements for inter-band Carrier Aggregation (CA) in the FR2-1 (Frequency Range 2-1 : 24250 MHz to 52600 MHz) band are under discussion. For Vehicular UEs in Power class 2, the specification work to support inter-band CA (n257-n259) needs to be also discussed. In the present disclosure, based on various examples, requirements and terminal/network behavior are proposed for Vehicular UE (power class 2) supporting inter-band CA using band n257 and band n259. Additionally, requirements for a Vehicular UE (power class 2) supporting inter-band CA using bands n260 and n261 are also proposed.

RF performance requirements for vehicular UEs supporting the 39 GHz band (n259) of the FR2-1 band and RF performance requirements for vehicular UEs supporting inter-band CA of 28 GHz + 39 GHz (n257+n259) are proposed. Requirements may include minimum peak EIRP and spherical coverage requirement to ensure communication.

Note that different requirements may apply for vehicular UEs than for handheld UEs. Vehicular UE can refer to a UE that is embedded in a vehicle. For example, a handheld UE may be smaller in size compared to a vehicular UE. For example, unlike a handheld UE, a vehicular UE may not need to support all 360 degrees of antenna orientation of the module and may only need to support an orientation above the ground. The modules included in a handheld UE and the modules included in a vehicular UE may not be significantly different, but for handheld UEs, more stringent requirements are defined to avoid harm to the human body. Therefore, a vehicular UE may have different requirements than a handheld UE.

Currently, FR2-1 assumes the UE power class and UE type as shown in Table 6 below.

[Table 6]

| UE Power class(PC) | UE type |
|---|---|
| 1 | Fixed wireless access (FWA) UE |
| 2 | Vehicular UE |

(continued)

| UE Power class(PC) | UE type |
|---|---|
| 3 | Handheld UE |
| 4 | High power non-handheld UE |
| 5 | Fixed wireless access (FWA) UE |
| 6 | High Speed Train Roof-Mounted UE |
| 7 | RedCap UE |
| Note: RedCap variants of non-RedCap UEs are not precluded | |

Table 6 shows an example of the assumptions for UE power class and UE type. Here, RedCap can mean Reduced Capability. This can refer to a device with reduced capabilities that can be implemented at a lower cost.

The FR2-1 inter-band UL CA will be introduced for PC1 UEs, PC2 UEs, and PC5 UEs. For PC2, which corresponds to the Vehicular UE, UL CAs using bands n257 and n259 will be introduced.

The corresponding bands are shown below

[Table 7]

| Operating Band | Uplink (UL) operating band BS receive UE transmit | Downlink (DL) operating band BS transmit UE receive | Duplex Mode |
|---|---|---|---|
| | $F_{UL\_low}$ - $F_{UL\_high}$ | $F_{DL\_low}$ - $F_{DL\_high}$ | |
| n257 | 26500 MHz - 29500 MHz | 26500 MHz - 29500 MHz | TDD |
| n258 | 24250 MHz - 27500 MHz | 24250 MHz - 27500 MHz | TDD |
| n259 | 39500 MHz - 43500 MHz | 39500 MHz - 43500 MHz | TDD |
| n260 | 37000 MHz - 40000 MHz | 37000 MHz - 40000 MHz | TDD |
| n261 | 27500 MHz - 28350 MHz | 27500 MHz - 28350 MHz | TDD |
| n262 | 47200 MHz - 48200 MHz | 47200 MHz - 48200 MHz | TDD |

Table 7 shows an example of the NR operating band in FR2.

The bands that make up an inter-band CA are shown in the example below. The Vehicular UE (PC2) can support CA_n257-n259.

[Table 8]

| NR CA Band | NR Band |
|---|---|
| CA_n257-n259 | n257,n259 |
| CA_n258-n260 | n258, n260 |
| CA_n260-n261 | n260, n261 |

The examples in Table 8 show examples of combinations of operating bands used for inter-band CAs. For example, Table 8 shows an example of inter-band CA operation bands on FR2.

In the prior art, the vehicular UE (PC2) only supported a single band, such as the following.

The example in Table 9 shows an example of the minimum peak Effective Isotropic Radiated Power (EIRP) for the operating bands supported by the vehicular UE (PC2).

[Table 9]

| Operating band | Min peak EIRP (dBm) | Max TRP (dBm) | Max EIRP (dBm) | Min EIRP at 60 %-tile CDF (dBm) |
|---|---|---|---|---|
| n257 | 29 | 23 | 43 | 18.0 |
| n258 | 29 | 23 | 43 | 18.0 |

(continued)

| Operating band | Min peak EIRP (dBm) | Max TRP (dBm) | Max EIRP (dBm) | Min EIRP at 60 %-tile CDF (dBm) |
|---|---|---|---|---|
| n261 | 29 | 23 | 43 | 18.0 |
| n262 | 22.9 | 23 | 43 | 11.0 |
| NOTE 1: Minimum peak EIRP is defined as the lower bound without tolerance. | | | | |

The example in Table 9 shows an example of UE minimum peak EIRP for power class 2 according to prior art.
Referring to Table 9, the Min peak EIRP, Max Total Radiated Power (TRP), Max EIRP, and Min EIRP at 60%-tile CDF are defined for the operating bands n257, n258, n261, and n262.
In order to support CA_n257-n259, a single band n259 requirements must be defined together. However, according to the example in Table 9, the single band n259 requirements has not been discussed at all in the literature. For this purpose, a Tx RF requirements and/or an Rx RF requirements for n259 based on the following analysis data are proposed.
In the following, the requirements related to the Vehicular UE (PC2) for the operating band n259 are proposed.
The Peak EIRP Requirement is described.
The example in Table 10 shows the parameters used in FR2-1 and an example of the minimum peak EIRP.

[Table 10]

| Parameter | Unit | Freq.Range n259 |
|---|---|---|
| Pout per element | dBm | 12 |
| # of antennas in array | | 8 |
| Total conducted power per polarization | dBm | 21 |
| Avg. antenna element gain | dBi | 3.5 |
| Antenna roll-off loss vs frequency | dB | -1.5 |
| Realized antenna array gain | dBi | 11.0 |
| Polarization gain | dB | 2.5 |
| Total implementation loss (worst-case) | dB | -9.5 |
| **Peak EIRP (Minimum)** | dBm | **25** |

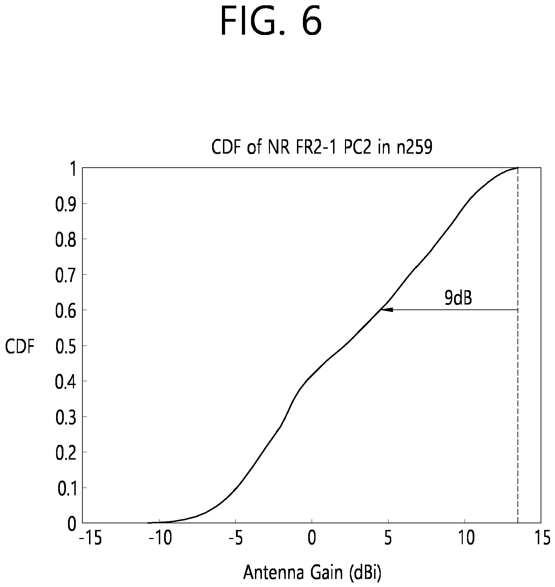

Following the example in Table 10, an example of the minimum peak EIRP for PC2 in the operating band n259 is derived. Pout per element may refer to the power amplifier output of one antenna element. The antenna element may include a polarization antenna (H-pole and V-pole). In H-pole, H may refer to horizontal and V may refer to vertical. Total conducted power per polarization may mean total conducted power per polarization. Avg. antenna element gain may mean the average value of the antenna element gain. Realized antenna array gain may mean the gain of an actually implemented antenna array, taking into account both the average value of the antenna element gain and the antenna roll-off loss in the antenna array gain derived from the number of antenna elements used. Polarization gain may mean the polarization gain. Total implementation loss (worst-case) may mean the total implementation loss in the worst case.
Based on the above analysis, for the operating band n259, we propose 25 dBm as the minimum peak EIRP for NR FR2-1 PC2. Here, in the example in Table 10, the minimum peak EIRP of 25 dBm is derived as follows.
25dBm = Total conducted power per polarization (21dBm) + Realized antenna array gain (11dBi) + Polarization gain (2.5dB) + Total implementation loss (-9.5dB).
Herein, Total conducted power per polarization (21dBm) = Pout per element(12dBm) + 10*log10(# of antennas in array = 8) = 12dBm+9dB.
Herein, Realized antenna array gain(11dBi) = Avg. antenna element gain (3.5dBi) + Antenna roll-off loss vs frequency(-1.5dB) + 10*log10(# of antennas in array = 8)= 3.5dBi - 1.5dB + 9dB = 11dBi.
Herein, Total implementation loss = -9.5dB.
Example 1 of the proposal in the present disclosure: Define the minimum peak EIRP as 25 dBm for PC2 in n259.
Spherical Coverage Requirement is descibed.
The example in Figure 6 shows an example of the Cumulative Distribution Function (CDF) for spherical coverage for FR2-1 PC2 in the operating band n259.

The following drawings are intended to illustrate specific embodiments of the present disclosure. The designations of specific devices or the designations of specific signals/messages/fields shown in the drawings are for illustrative purposes only, and the technical features of the present disclosure are not limited to the specific designations used in the drawings below.

FIG. 6 illustrates an example of antenna gain for an NR FR2-1 PC2 in the operating band n259, according to one embodiment of the present disclosure.

NR FR2-1 PC2 can refer to a PC2 UE using the NR FR2-1 band.

According to the CDF curve in Figure 6, the difference between the antenna gain corresponding to 100% tile and the antenna gain corresponding to 60% tile can be 9 dB. Here, 9 dB can mean the difference in EIRP between the peak EIRP (100%-tile) and the EIRP corresponding to 60% spherical coverage.

Taking into account the 3.5 dB implementation margin that can be applied to the CDF curve, 12.5 dBm is suggested for the 60%-tile of the CDF corresponding to the EIRP.

Example 2 of the proposal according to the present disclosure: For PC2 in n259, the spherical coverage EIRP is defined to be 12.5 dBm, taking into account a drop of 12.5 dB from the minimum peak EIRP.

The spherical coverage EIRP can be determined based on the value corresponding to the 60%-tile of the CDF based on the EIRP.

Multi Band Relaxation (MBR) Requirement is described.

For PC2, UEs supporting multiple FR2-1 bands shall be considered. Therefore, for a UE, the minimum requirement for peak EIRP and EIRP spherical coverage may be reduced on a per-band basis by the peak EIRP relaxation parameter $\Delta MB_{P,n}$ and the EIRP spherical coverage relaxation parameter $\Delta MB_{S,n}$, respectively. Multi Band (MB) relaxation similar to PC5 and PC6, may be defined as follows.

[Table 11]

| Band | $\Delta MB_{P,n}$ (dB) | $\Delta MB_{S,n}$ (dB) |
|---|---|---|
| n257 | 0.7 | 0.7 |
| n258 | 0.7 | 0.7 |
| n259 | 0.5 | 0.5 |
| n261 | 0.7 | 0.7 |
| n262 | 0.7 | 0.7 |

The example in Table 11 shows an example UE multi-band relaxation factor for power class 2. $\Delta MB_{P,n}$ can be a parameter to relax the peak EIRP. $\Delta MB_{S,n}$ can be a parameter to relax spherical coverage.

Table 12 and Table 13 below are examples of multi-band relaxation (MBR) for PC5 and PC6, respectively.

[Table 12]

| Band | $\Delta MB_{P,n}$ (dB) | $\Delta MB_{S,n}$ (dB) |
|---|---|---|
| n257 | 0.7 | 0.7 |
| n258 | 0.7 | 0.7 |
| n259 | 0.5 | 0,5 |

The example in Table 12 shows an example UE multi-band relaxation factor for power class 5.

[Table 13]

| Band | $\Delta MB_{P,n}$ (dB) | $\Delta MB_{S,n}$ (dB) |
|---|---|---|
| n257 | 0.7 | 0.7 |
| n258 | 0.7 | 0.7 |
| n261 | 0.7 | 0.7 |

The example in Table 13 shows an example UE multi-band relaxation factor for power class 6.

Example 3 of the proposal in the present disclosure: For a PC2 UE supporting multiple FR 2-1 bands, define MB relaxation according to the examples in Table 11.

Alternatively, the MBR according to the example in Table 11 may be one of, for example, { 0.1, 0.2, 0.3, 0.4, 0.4, 0.5, 0.5, 0.6, 0.6, 0.7, 0.8, 0.9 }.

REFSENS(reference sensitivity ) Requirement is described.

Table 14 shows the peak Effective Isotropic Sensitivity (EIS) for FR2-1 PC2 at n259 based on a Channl Bandwidth (CBW) of 100 MHz, based on the following equation - REFSENS = -174dBm(kT) + 10*log10(Max. RX BW) + Noise Figure(NF) - Total antenna gain (Total Ant. gain)-diversity gain + SNR + Implementation Losses (ILs).

kT may be the Thermal noise floor, which is determined by the temperature and/or bandwidth of the receiver. Max. RX BW can be the maximum receive bandwidth. NF (Noise Figure) may represent the ratio of the total noise power of the receiver output to the noise power generated by a hypothetical perfect receiver with the same input impedance. Total Ant. gain can be the total gain of the receiving antenna. diversity gain may be the increase in signal quality that can be achieved by using multiple antennas or multiple signal paths. SNR may be the Signal to Noise Ratio. IL can be the losses incurred in the receiver implementation, such as losses due to filters, couplers, and other components.

[Table 14]

| Parameter | Unit | Freq.Range n259 | | | |
|---|---|---|---|---|---|
| Max.Rx BW (X) | MHz | 50 | 100 | 200 | 400 |
| kTB/Hz | dBm | | -174 | | |
| 10log(Max. Rx BW) | dB | | 79.8 | | |
| Effective realized antenna array gain | dB | | 11.0 | | |
| Diversity Gain | dB | | 0 | | |
| SNR | dB | | -1 | | |
| NF | dB | | 11 | | |
| Total implementation loss | dB | | 9.5 | | |
| REFSENS | dBm/[X]MHz | -88.7 | -85.7 | -82.7 | -79.7 |

Table 14 shows an example of the peak EIS for FR2-1 PC2 at n259.

Based on the example parameters in Table 14, applying the equations related to REFSENS described earlier, the REFSENS according to Max.Rx BW is derived.

Regarding Max.Rx BW, the example in Table 15 below can be used as a reference.

[Table 15]

| SCS (kHz) | 50 MHz | 100 MHz | 200 MHz | 400 MHz |
|---|---|---|---|---|
| | NRB | NRB | NRB | NRB |
| 60 | 66 | 132 | 264 | N.A |
| 120 | 32 | 66 | 132 | 264 |

The example in Table 15 shows an example of NRB setting the maximum transmit bandwidth based on SCS and bandwidth.

REFSENS may be defined based on a channel bandwidth (CBW) of 100 MHz. Then, the REFSENS for CBW 50MHz, 200MHz, 400MHz can be obtained by adding 10*1og10(X/100) to the REFSENS for CBW 100MHz.

Example 4 of the proposal in the present disclosure: For PC2 at n259, define REFSENS as follows:

- 88.7dBm for CBW of 50MHz
- 85.7dBm for CBW of 100MHz
- 82.7dBm for CBW of 200MHz

- 79.7dBm for CBW of 400MHz

EIS Spherical Requirement is described.

Taking into account the 12.5 dB drop used in the EIRP for Spherical Coverage, the following EIS spherical coverage requirements are proposed.

EIS spherical coverage = REFSENS + 12.5

Example 5 of the proposal in the present disclosure: for PC2 at n259, EIS spherical coverage is defined as follows:

- 76.2dBm for CBW of 50MHz
- 73.2dBm for CBW of 100MHz
- 70.2dBm for CBW of 200MHz
- 67.2dBm for CBW of 400MHz

In the following, the requirements or specification for PC2 for inter-band CAs are described.

For example, the requirements related to PC2 for CA_n257-n259 are described.

Where CA_n257-n259 refers to CAs based on operation band n257 and operation band n259.

For the Vehicular UE (PC2), based on the conventionally defined n257 related requirements and the n259 related requirements proposed in the present dislcosure, the PC2 CA_n257-n259 requirements (i.e., PC2 related requirements for CA_n257-n259) are proposed as follows.

It is possible for a Vehicular UE to support CA_n257-n259 by using independent beam management (IBM). In this case, the requirements related to the Tx power of the UE need to be relaxed compared to the requirements related to the single band. For example, for a CA supporting two single bands, the spherical coverage of the CA may be the spherical coverage that is the intersection of the spherical coverage of each single band. In this case, the CA_spherical coverage might be smaller than the single band spherical coverage area. In order to apply the CA spherical coverage with the same size as the single band spherical area in the requirements related to the CA, a corresponding EIRP value relaxation is required. The requirements should be defined based on this relaxation and reflected in the standard to ensure CA performance. In addition, the requirements related to the Rx RF of the UE also need to be relaxed compared to the requirements related to the single band, so it is necessary to define requirements based on these relaxations to ensure CA performance.

To this end, in accordance with one embodiment of the disclosure, the Tx RF side defines $\Delta T_{IB}$ EIRP relaxations ($\Delta T_{IB,P,n}$ & $\Delta T_{IB,S,n}$), and/or inter-band CA maximum output power reduction (MPR).

To this end, one embodiment of the present disclosure defines $\Delta R_{IB}$ relaxations on the Rx RF side.

As a reminder, the terms described above can mean the following

$\Delta T_{IB}$ can mean Allowed relaxation to EIRP requirements due to support for inter-band CA operation.

$\Delta T_{IB,P,n}$ can mean Allowed relaxation to peak EIRP requirements due to support for inter-band CA operation, per band in a combination of supported bands.

$\Delta T_{IB,S,n}$ can mean allowed relaxation to EIRP spherical coverage due to support for inter-band CA operation, per band in a combination of supported bands.

$\Delta R_{IB}$ can mean allowed reference sensitivity relaxation due to support for inter-band CA operation.

$\Delta R_{IB,P,n}$ can mean allowed relaxation to reference sensitivity due to support for inter-band CA operation, per band in a combination of supported bands.

$\Delta R_{IB,S,n}$ can mean allowed relaxation to EIS spherical coverage due to support for inter-band CA operation, per band in a combination of supported bands)

$\Delta T_{IB}$, which is the EIRP relaxation for PC2, is described.

For $\Delta T_{IB,P,n}$, based on $\Delta T_{IB,P,n}$ = MBR (see example in Table 11), 0.7 dB and 0.5 dB can be considered for n257 and n259, respectively.

For $\Delta T_{IB,S,n}$ (= $\Delta T_{IB,P,n}$ + $R_{overlap}$), to cover the 40% common spherical coverage for PC2 at n257 + n259, a $R_{overlap}$ of 2.0 dB can be analyzed, based on the example in Table 16. The $R_{overlap}$ can be the Relaxation value required, for example, to make the intersection of two single spherical coverages (CA_shperical) equal to the single spherical coverage size, as described earlier.

[Table 16]

| R_overlap (dB) | IBM - Common spherical coverage (%) | n257 spherical coverage (%) | n259 spherical coverage (%) |
|---|---|---|---|
| 0.0 | 31.1 | 40.1 | 40.0 |
| 0.5 | 33.6 | 43.0 | 42.1 |

23

(continued)

| R_overlap (dB) | IBM - Common spherical coverage (%) | n257 spherical coverage (%) | n259 spherical coverage (%) |
|---|---|---|---|
| 1.0 | 36.0 | 45.4 | 44.5 |
| 1.5 | 38.2 | 47.9 | 46.6 |
| 2.0 | 40.4 | 50.6 | 48.8 |
| 2.5 | 42.7 | 53.4 | 50.8 |

Table 16 shows an example of $R_{overlap}$ in an inter-band CA based on n257 and n259, for PC2.

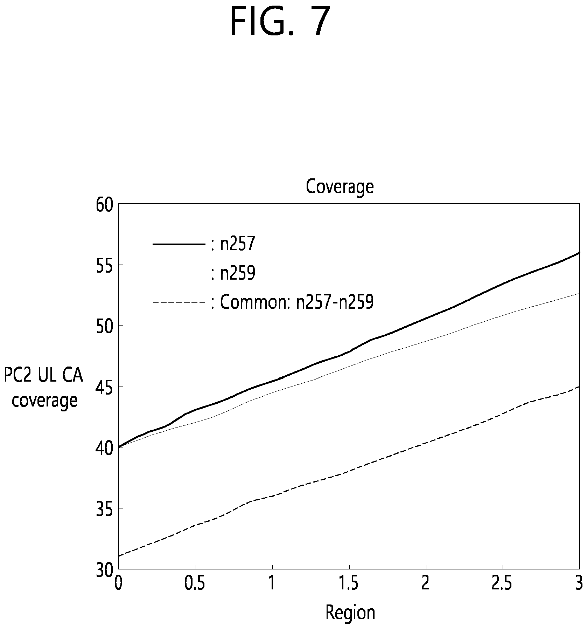

For reference, Table 16 is derived based on the analysis of the example in FIG. 7.

The following drawings are intended to illustrate specific embodiments of the present disclosure. The designations of specific devices or the designations of specific signals/messages/fields shown in the drawings are for illustrative purposes only, and the technical features of the present disclosure are not limited to the specific designations used in the drawings below.

FIG. 7 is an example of common spherical coverage in the case of PC2 CA_n257-n259, according to one embodiment of the present disclosure.

The example in FIG. 7 shows an example of Common spherical coverage vs. R_region for PC2 CA_n257-n259.

Table 16 is determined based on FIG. 7. Currently, for PC2, a spherical coverage 60%-tile with an EIRP of 18 dBm is required for n257. Also, for PC2, a spherical coverage 60%-tile with an EIRP of 12.5 dBm, which is the value according to the example described of the present disclosure, must be satisfied for n259. And, the common spherical coverage shall be 40%.

According to the example in Table 16, for UEs with PC2 CA_n257-n259 set, when R_region = 0 dB, n257 and n259 satisfy the top 40% with 60% spherical coverage, respectively, but the common spherical coverage is 31.1%, which is less than 40%. For example, at 100%-tile, 60%-tile can be interpreted as the top 40%. 40% of the y-axis can correspond to 60%-tiles at n257, n259. In the example in Figure 7, for common, 31% corresponding to Rregion=0 can mean 69%-tile. This may represent a smaller region than the conventional 60%-tile. For Rregion=2, 40.4 corresponds to 59.6%-tile, which can satisfy the traditional spherical 60%-tile.

With R_region = 2.0 dB, the common spherical coverage is 40.4%, which satisfies 40%. R_region = 2 dB can mean that the EIRP value corresponding to 60% spherical coverage of n257 is relaxed by 2 dB, and the EIRP value corresponding to 60% spherical coverage of n259 is relaxed by 2 dB. For example, with R_region = 2 dB, the spherical coverage of each band is relaxed to 18 dBm - 2 dB = 16 dBm for n257 and 12.5 dBm - 2 dB = 10.5 dBm for n259 to satisfy the common spherical coverage of 40%.

Based on the example in Figure 7 and the example in Table 16, Table 17 below summarizes the relaxation of the EIRP, $\Delta T_{IB}$.

[Table 17]

| NR CA configuration | NR band | $\Delta T_{IB,P,n}$ (dB) | $\Delta T_{IB,S,n}$ (dB) |
|---|---|---|---|
| CA_n257A-n259A | n257 | [0.7] | [2.7] |
| | n259 | [05] | [25] |

The example in Table 17 shows example relaxation values of EIRP for NR operating bands n257, n259, respectively, when the NR CA setting is CA_n257A-n259A.

Example 6 of proposal according to the present disclosure: For PC2 UL CA_n257-n259, ΔTIB, which is the relaxation of the EIRP, is defined based on Table 17.

If an additional X dB is required as additional relaxation due to the operation of the inter-band CA (e.g., relaxation to account for heat generation), the relaxation of the EIRP, ΔTIB, can be defined as the value according to the example in Table 17 plus X.

MPR on an inter-band UL CA for PC2 is described.

For inter-band UL CA MPRs, the following equations may be supported

$MPR_{inter-band\_CA} = max(MPR_{singleBand}, MPR_{PA-PA})$

Where $MPR_{inter-band\_CA}$ can be the maximum output power reduction (MPR) of the inter-band CA. $MPR_{singleBand}$ can be the MPR of a single-band single carrier, without applying CA. $MPR_{pa-pa}$ can be the MPR that takes into account the interaction effects between PAs implemented in the two bands that comprise the CA.

For MPR$_{PA-PA}$, MPR$_{PA-PA}$ = Max (MPR$_{Coex}$, 6 - 10*log10(PRB)) dB was once proposed for PC3. Since PC2 is expected to require less MPR than PC3, MPR$_{PA-PA}$ can also be applied to PC2. Where 2*f$_{n259}$ - f$_{n257}$ >= 57.0 GHz, MPR$_{Coex}$ can be replaced by '0', considering that MPR$_{Coex}$ is 0.5 dB if 2*fn259 - fn257 >= 57.0 GHz and 0 dB otherwise.

Example 7 of the proposal in the present disclosure: For PC2, define MPR$_{PA-PA}$ = Max (0, 6 - 10*log10(PRB)).

Rx RF requirements for PC2 DL CA_n257-n259 are described.

In general, if UL CAs are supported, DL CAs may also be supported. Therefore, the Rx requirements for PC2 DL CA_n257-n259 should be specified. The relevant requirements are ΔRIB relaxation (ΔRIB,P,n and ΔRIB,S,n).

Describe the ΔR$_{IB}$ relaxation for PC2.

The ΔR$_{IB}$ relaxation is summarized in Table 18.

$$\Delta R_{IB,P,n} = \Delta T_{IB,P,n} + 1$$

$$\Delta R_{IB,S,n} = \Delta T_{IB,S,n} + 1$$

[Table 18]

| NR CA configuration | NR band | ΔR$_{IB,P,n}$ (dB) | ΔR$_{IB,S,n}$ (dB) |
|---|---|---|---|
| CA_n257A-n259A | n257 | 1.7 | 3.7 |
| | n259 | 1.5 | 3.5 |

Table 18 shows an example of ΔRIB, the relaxation for inter-band UL CA on PC2. For a UE, when a CA based on NR operating bands n257 and n259 is established, the relaxation as shown in the example in Table 18 may be applied.

Example 8 of the proposal of the present disclosure: For PC2 DL CA_n257-n259, ΔR$_{IB}$ relaxation is defined according to the examples in Table 18.

Alternatively, for ΔTIB,P,n, the following is proposed, by considering an implementation margin and form factor of 1 dB, as shown in the example below. For example, for Example 6 and Example 8 of the present disclosure, another example is proposed.

The relaxation of the EIRP, ΔT$_{IB}$, is summarized in Table 19.

[Table 19]

| NR CA configuration | NR band | ΔT$_{IB,P,n}$ (dB) | ΔT$_{IB,S,n}$ (dB) |
|---|---|---|---|
| CA_n257A-n259A | n257 | 1.7 | 2.7 |
| | n259 | 1.5 | 2.5 |

The example in Table 19 shows an example of EIRP relaxation ΔT$_{IB}$ for NR operating bands n257, n259, respectively, when the NR CA setting is CA_n257A-n259A.

Example 6a of the proposal in the present disclosure: For PC2 UL CA_n257-n259, ΔT$_{IB}$, the relaxation of the EIRP, is defined based on Table 19.

The ΔR$_{IB}$ relaxation is summarized in Table 20.

$$\Delta R_{IB,P,n} = \Delta T_{IB,P,n}$$

$$\Delta R_{IB,S,n} = \Delta T_{IB,S,n} + 1$$

Here, in the Rx relaxation requirements, the same requirements is applied for Peak as for Tx, and for Spherical(ΔR$_{IB,S,n}$), +1 is considered compared to Tx. i.e., +1 more margin is considered for the Rx spherical than for the Tx spherical (ΔT$_{IB,S,n}$).

[Table 20]

| NR CA configuration | NR band | $\Delta R_{IB,P,n}$ (dB) | $\Delta R_{IB,S,n}$ (dB) |
|---|---|---|---|
| CA_n257A-n259A | n257 | 1.7 | 3.7 |
| | n259 | 1.5 | 3.5 |

Table 20 shows an example of $\Delta R_{IB}$, the relaxation for inter-band UL CA on PC2. For a UE, when a CA based on NR operating bands n257 and n259 is configured, the relaxation as shown in the example in Table 20 may be applied.

Example 8a of the proposal of the present disclosure: PC2 DL CA_n257-n259, define $\Delta$RIB relaxation according to the examples in Table 20.

Alternatively, for $\Delta T_{IB,P,n}$ and $\Delta T_{IB,S,n}$, the following for $\Delta T_{IB,P,n}$ and $\Delta T_{IB,S,n}$ are proposed, based on the implementation margin and form factor of 1 dB

The relaxation of the EIRP, $\Delta T_{IB}$, is summarized in Table 21.

[Table 21]

| NR CA configuration | NR band | $\Delta T_{IB,P,n}$ (dB) | $\Delta T_{IB,S,n}$ (dB) |
|---|---|---|---|
| CA_n257A-n259A | n257 | 1.7 | 3.7 |
| | n259 | 1.5 | 3.5 |

The example in Table 21 shows an example of EIRP relaxation $\Delta T_{IB}$ for NR operating bands n257, n259, respectively, when the NR CA setting is CA_n257A-n259A.

Example 6b of the proposal in the present disclosure: PC2 UL CA_n257-n259, define $\Delta T_{IB}$, the relaxation of the EIRP, based on Table 21.

The $\Delta R_{IB}$ relaxation is summarized in Table 22.

$$\Delta R_{IB,P,n} = \Delta T_{IB,P,n}$$

$$\Delta R_{IB,S,n} = \Delta T_{IB,S,n}$$

[Table 22]

| NR CA configuration | NR band | $\Delta R_{IB,P,n}$ (dB) | $\Delta R_{IB,S,n}$ (dB) |
|---|---|---|---|
| CA_n257A-n259A | n257 | 1.7 | 3.7 |
| | n259 | 1.5 | 3.5 |

Table 22 shows an example of $\Delta R_{IB}$, the relaxation for inter-band UL CA on PC2. For a UE, when a CA based on NR operating bands n257 and n259 is established, the relaxation as shown in the example in Table 22 may be applied.

Example 8b of the proposal in the present disclosure: PC2 UL CA_n257-n259, define $\Delta R_{IB}$ relaxation, based on Table 22.

Alternatively, for $\Delta T_{IB,P,n}$, applying the same value for n257 and n259 is suggested, as shown in the example below, taking into account the implementation margin and form factor of 1 dB.

The relaxation of the EIRP, $\Delta T_{IB}$, is summarized in Table 23.

[Table 23]

| NR CA configuration | NR band | $\Delta T_{IB,P,n}$ (dB) | $\Delta T_{IB,S,n}$ (dB) |
|---|---|---|---|
| CA_n257A-n259A | n257 | 1.7 | 2.7 |
| | n259 | 1.7 | 2.7 |

The example in Table 23 shows an example of EIRP relaxaion, $\Delta T_{IB}$, for NR operating bands n257, n259, respectively, when the NR CA configuration is CA_n257A-n259A.

Example 6c of the proposal in the present disclosure: PC2 UL CA_n257-n259, define $\Delta T_{IB}$ , which is EIRP relaxation, based on Table 23.

The $\Delta R_{IB}$ relaxation is summarized in Table 24.

$$\Delta R_{IB,P,n} = \Delta T_{IB,P,n}$$

$$\Delta R_{IB,S,n} = \Delta T_{IB,S,n} + 1$$

[Table 24]

| NR CA configuration | NR band | $\Delta R_{IB,P,n}$ (dB) | $\Delta R_{IB,S,n}$ (dB) |
|---|---|---|---|
| CA_n257A-n259A | n257 | 1.7 | 3.7 |
| | n259 | 1.7 | 3.7 |

Table 24 shows an example of $\Delta R_{IB}$, the relaxation for inter-band UL CA on PC2. For a UE, when a CA based on NR operating bands n257 and n259 is configured, the relaxation as shown in the example in Table 24 may be applied.

Example 8d of the proposal in the present disclosure: PC2 UL CA_n257-n259, define $\Delta R_{IB}$ relaxation, based on Table 24.

Alternatively, for $\Delta T_{IB,P,n}$, applying the same value for n257 and n259 is suggested, as shown in the example below, taking into account the implementation margin and form factor of 1 dB, as shown below.

The relaxation of the EIRP, $\Delta T_{IB}$, is summarized in Table 25.

[Table 25]

| NR CA configuration | NR band | $\Delta T_{IB,P,n}$ (dB) | $\Delta T_{IB,S,n}$ (dB) |
|---|---|---|---|
| CA_n257A-n259A | n257 | 1.5 | 2.5 |
| | n259 | 1.5 | 2.5 |

The example in Table 25 shows an example of EIRP relaxation $\Delta T_{IB}$ for NR operating bands n257, n259, respectively, when the NR CA setting is CA_n257A-n259A.

Example 6d of the proposal in the present disclosure: For PC2 UL CA_n257-n259, $\Delta T_{IB}$, the relaxation of the EIRP, is defined based on Table 25.

The $\Delta R_{IB}$ relaxatoin is summarized in Table 26.

$$\Delta R_{IB,P,n} = \Delta T_{IB,P,n}$$

$$\Delta R_{IB,S,n} = \Delta T_{IB,S,n} + 1$$

[Table 26]

| NR CA configuration | NR band | $\Delta R_{IB,P,n}$ (dB) | $\Delta R_{IB,S,n}$ (dB) |
|---|---|---|---|
| CA_n257A-n259A | n257 | 1.5 | 3.5 |
| | n259 | 1.5 | 3.5 |

Table 26 shows an example of $\Delta R_{IB}$, the relaxation for inter-band UL CA on PC2. For a UE, when a CA based on NR operating bands n257 and n259 is established, the relaxation as shown in the example in Table 26 may be applied.

Example 8d of the proposal of the present disclosure: PC2 DL CA_n257-n259, $\Delta R_{IB}$ relaxaion is defined according to the examples in Table 26.

Alternatively, for $\Delta T_{IB,P,n}$, applying the same value for n257 and n259 is suggested, as shown in the example below, taking into account the implementation margin and form factor of 1 dB, as shown below.

The relaxation of the EIRP, $\Delta T_{IB}$, is summarized in Table 27.

[Table 27]

| NR CA configuration | NR band | $\Delta T_{IB,P,n}$ (dB) | $\Delta T_{IB,S,n}$ (dB) |
|---|---|---|---|
| CA_n257A-n259A | n257 | 1.7 | 2.7 |
| | n259 | 1.7 | 2.7 |

The example in Table 27 shows an example of EIRP relaxation $\Delta T_{IB}$ for NR operating bands n257 and n259, respectively, when the NR CA configuration is CA_n257A-n259A.

Example 6e of the proposal of the present disclosure: For PC2 UL CA_n257-n259, $\Delta TIB$, a relaxation of the EIRP, is defined based on Table 27.

The $\Delta R_{IB}$ relaxation is summarized in Table 28.

$$\Delta R_{IB,P,n} = \Delta T_{IB,P,n}$$

$$\Delta R_{IB,S,n} = \Delta T_{IB,S,n}$$

[Table 28]

| NR CA configuration | NR band | $\Delta R_{IB,P,n}$ (dB) | $\Delta R_{IB,S,n}$ (dB) |
|---|---|---|---|
| CA_n257A-n259A | n257 | 1.7 | 3.7 |
| | n259 | 1.7 | 3.7 |

Table 28 shows an example of $\Delta R_{IB}$, the relaxation for inter-band UL CA on PC2. For a UE, when a CA based on NR operating bands n257 and n259 is configured, the relaxation as shown in the example in Table 28 may be applied.

Example 8e of the proposal of the present disclosure: For PC2 DL CA_n257-n259, $\Delta R_{IB}$ relaxation is defined according to the examples in Table 28.

Alternatively, for $\Delta T_{IB,P,n}$, applying the same value for n257 and n259 is suggested, as shown in the example below, taking into account the implementation margin and form factor of 1 dB.

The relaxation of the EIRP, $\Delta T_{IB}$, is summarized in Table 27.

[Table 29]

| NR CA configuration | NR band | $\Delta T_{IB,P,n}$ (dB) | $\Delta T_{IB,S,n}$ (dB) |
|---|---|---|---|
| CA_n257A-n259A | n257 | 1.7 | 2.7 |
| | n259 | 1.7 | 2.7 |

The example in Table 29 shows an example of EIRP relaxation $\Delta T_{IB}$ for NR operating bands n257 and n259, respectively, when the NR CA configuration is CA_n257A-n259A.

Example 6f of the proposal of the present disclosure: For PC2 UL CA_n257-n259, $\Delta TIB$, the relaxation of the EIRP, is defined based on Table 29.

The $\Delta R_{IB}$ relaxation is summarized in Table 30.

$$\Delta R_{IB,P,n} = \Delta T_{IB,P,n}$$

$$\Delta R_{IB,S,n} = \Delta T_{IB,S,n}$$

[Table 30]

| NR CA configuration | NR band | $\Delta R_{IB,P,n}$ (dB) | $\Delta R_{IB,S,n}$ (dB) |
|---|---|---|---|
| CA_n257A-n259A | n257 | 1.7 | 3.7 |
| | n259 | 1.7 | 3.7 |

Table 30 shows an example of $\Delta R_{IB}$, the relaxation for inter-band UL CA on PC2. For a UE, when a CA based on NR operating bands n257 and n259 is configuration, the relaxation as shown in the example in Table 30 may be applied.

Example 8f of the proposal of the present disclosure: For PC2 DL CA_n257-n259, $\Delta RIB$ relaxation is defined according to the examples in Table 30.

It is proposed that Example 6 through Example 6f of the present disclosure and Example 8 through Example 8f of the present disclosure apply equally to inter-band UL CAs based on n261 and n260 in PC2. Here, n257 and n261 may be bands of the 28 GHz band and n259 and n260 may be bands of the 39 GHz band.

The following describes the case where the Vehicular UE (PC2) supports CA based on NR operating bands n260, n261, i.e., the case where the Vehicular UE (PC2) supports CA_n260-n261.

If the Vehicular UE (PC2) supports CA_n260-n261, the following description may apply.

In the following, we propose requirements for the n260 band as follows, and based on the requirements for the n260 band, we propose a CA requirements (i.e., requirements related to CA).

In the following, the requirements related to the Vehicular UE (PC2) for the operating band n260 are proposed.

Peak EIRP Requirement is described.

The example in Table 31 shows the parameters used in FR2-1 and an example of the minimum peak EIRP.

[Table 31]

| Parameter | Unit | Freq.Range n260 |
|---|---|---|
| Pout per element | dBm | 12 |
| # of antennas in array | | 8 |
| Total conducted power per polarization | dBm | 21 |
| Avg. antenna element gain | dBi | 3.5 |
| Antenna roll-off loss vs frequency | dB | -1.5 |
| Realized antenna array gain | dBi | 11.0 |
| Polarization gain | dB | 2.5 |
| Total implementation loss (worst-case) | dB | -7.5 |
| **Peak EIRP (Minimum)** | dBm | **27** |

Based on the example in Table 31, an example of the minimum peak EIRP for PC2 in the operating band n260 is derived.

Example 1a of the proposal of the present disclosure: minimum peak EIRP of 27 dBm is defined, for PC2 of n260.

Alternatively, a minimum peak EIRP of 26 dBm is defined, for PC2 on n260, considering a total implementation loss of -8.5 dB.

Alternatively, a minimum peak EIRP of 26.5 dBm is defined, for PC2 on n260, considering a total implementation loss of -8.0 dB.

Describes the Spherical Coverage Requirement.

For PC2 in the operating band n260, 14.5 dBm is proposed for the 60%-tile of the CDF corresponding to the EIRP, applying a 12.5 dB drop, as in the example of n259 described earlier.

Example 2a of the proposal according to the present disclosure: For PC2 of n260, define the spherical coverage EIRP to be 14.5 dBm, taking into account a drop of 12.5 dB from the minimum peak EIRP.

Describe the MBR Requirement.

For PC2, UEs supporting multiple FR2-1 bands shall be considered. Therefore, for a UE, the minimum requirement for peak EIRP and EIRP spherical coverage may be reduced on a per-band basis by the peak EIRP relaxation parameter $\Delta M_{BP,n}$ and the EIRP spherical coverage relaxation parameter $\Delta M_{BS,n}$, respectively. For PC2 of n260, we propose MB relaxation similar to PC2 of n259 as follows.

[Table 32]

| Band | ΔMB$_{P,n}$ (dB) | ΔMB$_{S,n}$ (dB) |
|------|------|------|
| n257 | 0.7 | 0.7 |
| n258 | 0.7 | 0.7 |
| n259 | 0.5 | 0.5 |
| n260 | 0.5 | 0.5 |
| n261 | 0.7 | 0.7 |
| n262 | 0.7 | 0.7 |

The example in Table 32 shows an example UE multi-band relaxation factor for power class 2.

Example 3a of the proposal according to the present disclosure: For a PC2 UE supporting multiple FR 2-1 bands, MB relaxation is defined according to the examples in Table 32.

Alternatively, the MBR according to the example in Table 32 may be one of, for example, { 0.1, 0.2, 0.3, 0.4, 0.4, 0.5, 0.5, 0.6, 0.6, 0.7, 0.8, 0.9 }.

REFSENS Requirement is described

Table 33 shows the peak EIS for FR2-1 PC2 at n260 based on a Channl Bandwidth (CBW) of 100 MHz, based on the following equation.

$$- \text{REFSENS} = -174\text{dBm(kT)} + 10*\log10(\text{Max. RX BW}) + \text{NF} - \text{Total Ant. gain} - \text{diversity gain} + \text{SNR} + \text{ILs}$$

[Table 33]

| Parameter | Unit | Freq.Range n260 | | | |
|-----------|------|------|------|------|------|
| Max.Rx BW (X) | MHz | 50 | 100 | 200 | 400 |
| kTB/Hz | dBm | | -174 | | |
| 10log(Max. Rx BW) | dB | | 79.8 | | |
| Effective realized antenna array gain | dB | | 11.0 | | |
| Diversity Gain | dB | | 0 | | |
| SNR | dB | | -1 | | |
| NF | dB | | 11 | | |
| Total implementation loss | dB | | 8.5 | | |
| REFSENS | dBm/[X]MHz | -89.7 | -86.7 | -83.7 | -80.7 |

Table 33 shows an example of the peak EIS for FR2-1 PC2 at n260.

REFSENS may be defined based on a channel bandwidth (CBW) of 100 MHz. Then, the REFSENS for CBW 50MHz, 200MHz, 400MHz can be obtained by adding 10*log10(X/100) to the REFSENS for CBW 100MHz.

Example 4a of the proposal according to the present disclosure: For PC2 at n260, define REFSENS as follows:

- 89.7dBm for CBW of 50MHz
- 86.7dBm for CBW of 100MHz
- 83.7dBm for CBW of 200MHz
- 80.7dBm for CBW of 400MHz

EIS Spherical Requirement is described.

Taking into account the 12.5 dB drop used in the EIRP for Spherical Coverage, the following EIS spherical coverage requirements are proposed.

EIS Spherical Coverage = REFSENS + 12.5

Example 5a of the proposal according to the present disclosure: For PC2 at n260, we define EIS spherical coverage as follows:

- 77.2dBm for CBW of 50MHz
- 74.2dBm for CBW of 100MHz
- 71.2dBm for CBW of 200MHz
- 68.2dBm for CBW of 400MHz

In the following, we describe the requirements or specification for PC2 for inter-band CAs. For example, the PC2 requirements for CA_n260-n261 will be described.

For the Vehicular UE (PC2), based on the conventionally defined n261 related requirements and the n260 related requirements proposed in the introduction of this specification, the PC2 CA_n260-n261 requirements (i.e., PC2 related requirements for CA_n260-n261) are proposed as follows.

It is possible for a Vehicular UE to support CA_n260-n261 by using independent beam management (IBM - independent beam management). In this case, the requirements related to the Tx power of the UE need to be relaxed compared to the requirements related to single band. The specification should be defined based on this relaxation and reflected in the standard to ensure CA performance. The specification related to the Rx RF of the UE also needs to be relaxed compared to the specification related to the single band, and the specification based on this relaxation needs to be defined to ensure CA performance.

To this end, in accordance with one embodiment of the disclosure, for the Tx RF side, $\Delta T_{IB}$ EIRP relaxations ($\Delta T_{IB,P,n}$ & $\Delta T_{IB,S,n}$), and/or inter-band CA maximum output power reduction (MPR) are defined.

To this end, one disclosed embodiment of the present disclosure defines $\Delta R_{IB}$ relaxations on the Rx RF side.

Describe $\Delta T_{IB}$, the EIRP relaxation for PC2.

For $\Delta T_{IB,P,n}$, based on $\Delta T_{IB,P,n}$ = MBR (see example in Table 32), 0.5 dB and 0.7 dB can be considered for n260 and n261, respectively.

For $\Delta T_{IB,S,n}$ (= $\Delta T_{IB,P,n}$ + $R_{overlap}$ ), to cover a common spherical coverage of 40% for PC2 at n260 + n261, a Roverlap of 2.0 dB can be considered, based on the example in Table 16.

Based on this, the relaxation of the EIRP, $\Delta T_{IB}$, is summarized according to Table 34 below.

[Table 34]

| NR CA configuration | NR band | $\Delta T_{IB,P,n}$ (dB) | $\Delta T_{IB,S,n}$ (dB) |
|---|---|---|---|
| CA_n260A-n261A | n260 | [0.5] | [2.5] |
| | n261 | [0.7] | [2.7] |

The example in Table 34 shows example relaxation values of EIRP for NR operating bands n260, n261, respectively, when the NR CA configuration is CA_n260A-n261A.

Example 6a of the proposal according to the present disclosure: For PC2 UL CA_n260-n261, $\Delta$TIB, a relaxation of the EIRP, is defined based on Table 34.

If an additional X dB of relaxation is required due to the behavior of the inter-band CA (e.g., relaxation to account for heat generation), then the relaxation of the EIRP, $\Delta T_{IB}$, can be defined as the value according to the example in Table 34 plus X.

Describes MPR on an inter-band UL CA for PC2.

The same MPR for PC2 CA_n257-n259 may be reused as the MPR for PC2 CA_n260_n261.

Example 7a of the proposal according to the present disclosure: For PC2, define MPRPA-PA = Max (0, 6 - 10 *log 10(PRB)).

Describes the Rx RF requirements for PC2 DL CA_n260-n261.

In general, if UL CAs are supported, DL CAs can also be supported. Therefore, the Rx requirements for PC2 DL CA_n260-n261 must be specified. The relevant requirements are $\Delta R_{IB}$ relaxation ($\Delta R_{IB,P,n}$ and $\Delta R_{IB,S,n}$).

Describe the $\Delta R_{IB}$ relaxation for PC2.

The $\Delta R_{IB}$ relaxation is summarized in Table 35.

$$\Delta R_{IB,P,n} = \Delta T_{IB,P,n} + 1$$

$$\Delta R_{IB,S,n} = \Delta T_{IB,S,n} + 1$$

[Table 35]

| NR CA configuration | NR band | $\Delta R_{IB,P,n}$ (dB) | $\Delta R_{IB,S,n}$ (dB) |
|---|---|---|---|
| CA_n260A-n261A | n260 | 1.5 | 3.5 |
| | n261 | 1.7 | 3.7 |

Table 35 shows an example of $\Delta R_{IB}$, the relaxation for inter-band UL CA on PC2. For a UE, when a CA based on NR operating bands n260 and n261 is configured, the relaxation as shown in the example in Table 35 may be applied.

Example 8a of the proposal according to the present disclosure: For PC2 DL CA_n260-n261, $\Delta R_{IB}$ relaxation is defined according to the examples in Table 35.

With respect to the RF specifications, RF requirements, etc. previously described in various examples, the operation of the terminal (e.g., UE) and/or the operation of the network (e.g., base station such as gNB) may apply, as illustrated in the examples below.

As an example, typical terminal/network operation and requirements for the Vehicular UE (PC2) CA terminal are described below. In the following, the terminal operation may be performed by a UE. The network behavior may be performed by a gNB, base station, NG-RAN, etc.

The device tells the network that it is a power class 2 device (PC2 capability). For example, a UE may transmit capability information indicating that it is a power class 2 UE to the network.

The terminal informs the network of inter-band CA band capability (CA_n257-n259, or CA_n260-n261). For example, a UE may transmit capability information related to the inter-band CA bands that the UE supports, to the network. For example, the UE may transmit information related to whether the UE supports CA_n257-n259 and/or information related to whether the UE supports CA_n260-n261, to the network.

The network uses information about the capabilities of the UE (capabilities related to PC2, CA, etc.) to configure/operate PC2 CA to the UE. For example, the network may configure and/or operate PC2 related operation based on whether the UE's power class is PC2. For example, the network may configure and/or operate behaviors related to CA to a terminal based on information about whether the UE supports CA_n257-n259 and/or information related to whether the UE supports CA_n260-n261. For example, for a PC2 UE, the network may configure and/or operate CA-related behavior on the terminal based on information related to whether the UE supports CA_n257-n259 and/or information related to whether the UE supports CA_n260-n261.

The terminal may perform actions such as the examples below:

- No CA is configured for the terminal from the network, and the terminal may support NR in the n257 band. In this case, the terminal shall meet the specifications (or requirements) related to n257 single RF performance.
- No CA is configured for the device from the network, and the terminal can support NR in the n259 band. In this case, the specifications (or requirements) related to n259 single RF performance must be met.
- A CA is configured for the terminal from the network, and the terminal can support NR with a single n257 band. In this case, the specifications (or requirements) related to n257 single RF performance must be met.
- A CA is configured for the terminal from the network, and the terminal can support NR with a single n259 band. In this case, the specifications (or requirements) related to n259 single RF performance must be met.
- A CA is configured for the terminal from the network, and the terminal can support n257-n259 NR CAs. In this case, the terminal must satisfy common spherical coverage.
- No CA is configured for the device from the network, and the terminal can support NR in the n260 band. In this case, the terminal must meet the specifications (or requirements) related to n260 single RF performance.
- No CA is configured for the terminal from the network, and the terminal can support NR in the n261 band. In this case, the specifications (or requirements) related to n261 single RF performance must be met.
- A CA is configured for the terminal from the network, and the terminal can support NR with a single n260 band. In this case, the specifications (or requirements) related to n260 single RF performance must be met.
- A CA is configured for the terminal from the network, and the terminal can support NR with a single n261 band. In this case, the specifications (or requirements) related to n261 single RF performance must be met.
- A CA is configured for the terminal from the network, and the terminal can support n260-n261 NR CAs. In this case, the terminal must satisfy common spherical coverage.

A terminal may be validated based on the RF requirements of the various examples outlined in the present disclosure by conformance testing prior to release of the terminal. If the terminal does not pass the tests (e.g., tests against requirements related to inter-band CA), it may be deemed not to support CA.

The following drawings are intended to illustrate specific embodiments of the present disclosure. The designations of specific devices or the designations of specific signals/messages/fields shown in the drawings are for illustrative purposes only, and the technical features of the present disclosure are not limited to the specific designations used in the drawings below.

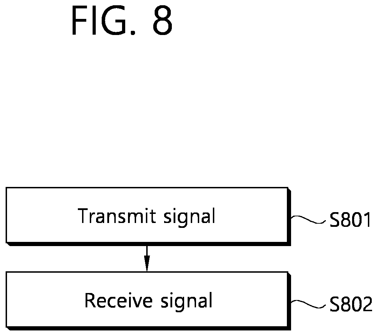

FIG. 8 illustrates an example of the behavior of a UE according to one embodiment of the present disclosure.

In the example of FIG. 8, the UE may be subject to the RF requirements previously described in various examples of the disclosure. For example, the requirements related to PC2, the requirements related to NR operating band n259, the requirements related to NR operating band n257, the requirements related to NR operating band n260, the requirements related to NR operating band n261, the requirements related to CA based on n257 and n259, and/or the requirements related to CA based on n260 and n261 may apply.

Also, the operation of the UE illustrated in the example of FIG. 8 is illustrative only. The operation of the UE is not limited by the example of FIG. 8, and the UE may perform any of the operations previously described in various examples of the present disclosure.

Note that the order in which step S801 and step 802 are performed may differ from the example of FIG. 8. Also, only one of the operations of step S801 or step S802 may be performed.

At step S801, the UE may transmit a signal. For example, the UE may transmit an uplink signal.

When a UE transmits a signal, requirements related to transmission in the various examples described earlier may be applied.

For example, for power class 2, the maximum output power of the UE may be defined as shown in the following example.

The following requirements define the maximum output power that can be emitted by the UE for any transmission bandwidth within the channel bandwidth for non-CA setups. The measurement period shall be at least one subframe (1 ms). The minimum output power value for EIRP may be as follows. For example, the min peak EIRP for operating band n257 may be 29 dBm, the min peak EIRP for operating band n259 may be 25 dBm, the min peak EIRP for operating band n260 may be 27 dBm, the min peak EIRP for operating band n261 may be 29 dBm, etc. This requirement can be verified by test measurements of EIRP (Link = TX beam peak direction, Meas = Link angle).

The minimum EIRP corresponding to the 60th percentile of the measured emitted power distribution in a full sphere around the UE is defined as the spherical coverage requirement, which can be found in Table 6.2.1.2-3 below. This requirement can be verified by test measurements of EIRP (Link = spherical coverage grid, Meas = Link angle). For example, the min EIRP for a 60%-tile CDF of n257 might be 18.0 dBm, the min EIRP for a 60%-tile CDF of n259 might be 12.5 dBm, the min EIRP for a 60%-tile CDF of n260 might be 14.5 dBm, and the min EIRP for a 60%-tile CDF of n261 might be 18.0 dBm.

With respect to CA, requirements regarding maximum UE output power may apply.

For an inter-band UL CA with two NR bands, each UL band consisting of a single CC, the maximum power requirement may be applied on a per-band basis on both carriers enabled with non-zero power UL RB assignments. The maximum output power value of the EIRP is applicable on a per-carrier basis and is in accordance with the values proposed in the various examples of the present disclosure. The minimum peak value of the EIRP is defined in various examples of the disclosure and may be further relaxed by $\Delta T_{IB,P,n}$ as proposed in various examples of the disclosure. The peak EIRP requirement may be verified with a test metric of EIRP (link=TX beam peak direction, measurement=link angle).

The inter-band UL CA spherical coverage requirement for each power class is met if the intersection set of spherical coverage areas exceeds the common coverage requirement for that power class. For Inter-band UL CA, the spherical coverage area for each band is the area of the sphere measured around the UE. The EIRP measured here may exceed the EIRP levels proposed in the various examples of the disclosure in the table, and may be further reduced by the parameters $\Delta T_{IB,S,n}$ proposed in the various examples of the disclosure. An intersection set of spherical coverage areas is defined as a portion of the total spherical area measured around the UE, where two bands meet the individual EIRP spherical coverage requirements for inter-band CA operation. The requirement with respect to common coverage is determined as <100-percentile rank> %, where "percentile rank" may be any percentile value for the spherical coverage requirement for the corresponding power class proposed in the various examples of the disclosure. The spherical coverage EIRP requirement is validated with the test metric of EIRP (link=spherical coverage grid, measure=link angle).

The $\Delta T_{IB}$ parameter was previously described in various examples earlier in this disclosure.

At step S802, the UE may receive the signal. For example, the UE may transmit a downlink signal.

When a UE receives a signal, requirements related to reception in the various examples described earlier may apply.

The reference sensitivity power level REFSENS is defined as the EIS level at the center of the quite zone zone in the RX beam peak direction at which the throughput must meet or exceed the specified reference measurement channel requirements.

The reference sensitivity power level for power class 2 is as follows. For example, the throughput shall be at least 95% of the maximum measurement throughput based on the reference measurement channel and reference sensitivity as specified in appendices A.2.3.2 and A.3.3.2 of 38.101-2 V17.5.0. Wherein, reference sensitivity may mean REFSENS according to Example 4 of the disclosure of this specification, or REFSENS according to Example 4a of the present disclosure. The requirement with respect to REFSENS may be verified by test measurements of EIS (Link = RX beam peak direction, Meas = Link angle).

The EIS legacy coverage for Power Class 2 is as follows.

The reference measurement channel and throughput criteria may be based on the requirements related to REFSENS. A maximum EIS corresponding to 60%-tile of the CCDF of the EIS measured in the full sphere around the UE may be defined as a spherical coverage requirement. The EIS spherical coverage may be based on Example 5 of the proposal of the present disclosure, or Example 5a of the proposal of the present disclosure. This requirement may be validated by test measurements of the EIS (Link = spherical coverage grid, Meas = Link angle).

Requirements regarding reference sensitivity for DL CAs may apply.

The inter-band requirements apply to all active component carriers. The throughput of each component carrier shall be at least 95% of the maximum throughput based on the peak REFSENS for each carrier proposed in the various examples of the present disclosure in the reference measurement channels specified in appendices A.2.3.2 and A.3.3.2 of 38.101-2 V17.5.0 and in the various examples of present disclosure. The relaxation $\Delta R_{IB,P,n}$ may be applied to the peak REFSENS requirement. The relaxation factor $\Delta R_{IB,P,n}$ is specified in the various examples of the present disclosure. The requirements for each component carrier shall be met when the power of the component carriers in different bands is set to the EIS spherical coverage requirements for interband CA specified in the disclosure.

Requirements related to EIS spherical coverage for inter-band CAs may apply.

For all active component carriers with ULs assigned to one band and one DL component carrier per band, the Inter-band CA requirement is applied per band of operation. When the power of component carriers in different bands is set to the EIS spherical coverage requirements for inter-band CA, the requirements for each component carrier must be met.

If the intersection set of spherical coverage areas exceeds the common coverage requirement, the inter-band CA spherical coverage requirement for each power class is fulfilled. The intersection set of spherical coverage areas is defined as the portion of the total spherical area measured around the UE. Here, both bands meet the individual EIS spherical coverage requirements defined for inter-band CA operation. The common coverage requirement is determined as <100-percentile rank> %, where 'percentile rank' is the percentile value of the spherical coverage specification for power class 2 as described in the various examples in the present disclosure. The requirement is validated with test metrics from EIS (link=beam peak search grid, measurement=link angle).

In interband CA operation, the spherical coverage EIS required for each band is applied according to the various examples in the present disclosure and may be modified by $\Delta R_{IB,S,n}$ as proposed in the various examples in the present disclosure.

The following drawings are intended to illustrate specific embodiments of the present disclosure. The designations of specific devices or the designations of specific signals/messages/fields shown in the drawings are for illustrative purposes only, and the technical features of the present disclosure are not limited to the specific designations used in the drawings below.

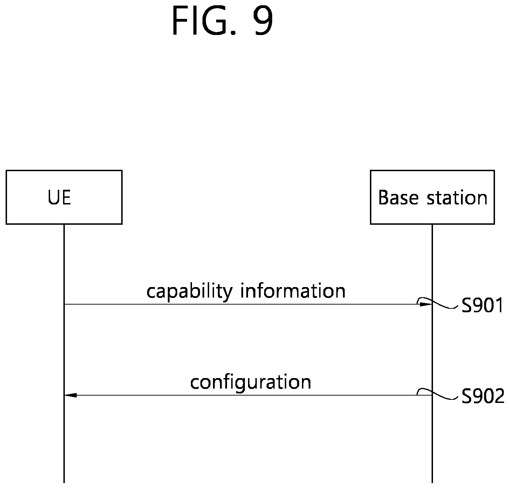

FIG. 9 illustrates an example of the behavior of a UE and an example of the operation of a base station, according to one embodiment of the present disclosure.

In the example of FIG. 9, for a UE and/or base station, the RF requirements and related behaviors previously described in various examples of the disclosure may be applied. For example, the requirements associated with PC2, the requirements related to NR operating band n259, the requirements related to NR operating band n257, the requirements related to NR operating band n260, the requirements related to NR operating band n261, the requirements related to CA based on n257 and n259, and/or the requirements related to CA based on n260 and n261 may be applied.

Further, the operations of the UE and/or base station illustrated in the example of FIG. 9 are illustrative only. The behavior of the UE and/or base station is not limited by the example of FIG. 9, and the UE may perform any of the behaviors previously described in various examples herein.

Note that the order in which step S901 and step S902 are performed may differ from the example of FIG. 9. Also, only one of the operations of step S901 or step S902 may be performed.

In step S901, the UE may transmit capability information. The capability information may include, for example, information about the power class of the UE, the operating bands supported by the UE, and information about the CAs supported by the UE.

In step S902, the base station may transmit the settings. Based on the capability information, the base station may provide the UE with settings for communicating with the UE.

The present disclosure can have a variety of effects.

For example, by defining RF performance standard requirements for vehicular terminals supporting FR2-1 band, n259 and CA-n257-n259, communication between the network and the terminal can be ensured. For example, efficient and/or accurate communication can be ensured. Further, by defining RF performance standard requirements for vehicular terminals supporting FR2-1 band, n259, and CA-n257-n259, network-to-terminal communication can be commercialized.

The effects that may be obtained from the specific examples of this disclosure are not limited to those listed above. For example, there may be a variety of technical effects that a person having ordinary skill in the related art may understand or infer from this disclosure. Accordingly, the specific effects of the present disclosure are not limited to those expressly set forth herein, but may include a variety of effects that may be understood or inferred from the technical features of the present disclosure.

For reference, the operation of the terminal (e.g., UE, serving relay UE, remote UE, candidate relay UE) described in the present specification may be implemented by the apparatus of FIGS. 1 to 4 described above. For example, the terminal may be the first device 100 or the second device 200 of FIG. 2. For example, an operation of a terminal described herein may be processed by one or more processors 102 or 202 . The operation of the terminal described herein may be stored in one or more memories 104 or 204 in the form of an instruction/program (e.g., instruction, executable code) executable by one or more processors 102 or 202 . One or more processors 102 or 202 control one or more memories 104 or 204 and one or more transceivers 105 or 206, and may perform the operation of the terminal described herein by executing instructions/programs stored in one or more memories 104 or 204.

In addition, instructions for performing an operation of a terminal described in the present disclosure of the present specification may be stored in a non-volatile computer-readable storage medium in which it is recorded. The storage medium may be included in one or more memories 104 or 204 . And, the instructions recorded in the storage medium may be executed by one or more processors 102 or 202 to perform the operation of the terminal (e.g., UE) described in the present disclosure of the present specification.

For reference, the operation of a network node (e.g., AMF, SMF, UPF, PCF, etc.) or base station (e.g., NG-RAN, gNB, eNB, etc.) described herein may be implemented by the apparatus of FIGS. 1 to 3 to be described below. For example, a network node or a base station may be the first device 100 of FIG.2 or the second device 200 of FIG.2. For example, the operation of a network node or base station described herein may be processed by one or more processors 102 or 202. The operation of the terminal described herein may be stored in one or more memories 104 or 204 in the form of an instruction/program (e.g., instruction, executable code) executable by one or more processors 102 or 202. One or more processors 102 or 202 may perform the operation of a network node or a base station described herein, by controlling one or more memories 104 or 204 and one or more transceivers 106 or 206 and executing instructions/programs stored in one or more memories 104 or 204.

In addition, instructions for performing the operation of the network node or base station described in the present disclosure of the present specification may be stored in a non-volatile (or non-transitory) computer-readable storage medium. The storage medium may be included in one or more memories 104 or 204. And, the instructions recorded in the storage medium are executed by one or more processors 102 or 202, so that the operations of a network node or base station are performed.

In the above, preferred embodiments have been exemplarily described, but the present disclosure of the present specification is not limited to such specific embodiments, and thus, modifications, changes, or may be improved.

In the exemplary system described above, the methods are described on the basis of a flowchart as a series of steps or blocks, but are not limited to the order of the steps described, some steps may occur in a different order or concurrent with other steps as described above. In addition, those skilled in the art will understand that the steps shown in the flowchart are not exclusive and that other steps may be included or that one or more steps of the flowchart may be deleted without affecting the scope of rights.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method.

**Claims**

1. A User Equipment (UE) performing communications, the UE comprising:

   at least one transceiver;
   at least one processor; and
   at least one memory operably connectable to the at least one processor and storing instructions that, based on being executed by the at least one processor, perform operations comprising:

   transmitting a signal based on a New Radio (NR) operating band n259,
   wherein the UE is a power class 2 UE, and
   wherein a minimum peak Effective Isotropic Radiated Power (EIRP) for the NR operating band n259 is 25 decibel-milliwatt (dBm), based on the UE being the power class 2 UE.

**2.** The UE of claim 1,
wherein a minimum EIRP of 12.5 dBm of 60th percentile Cumulative Distribution Function (CDF) related to spherical coverage of the NR operating band n259, based on the UE being the power class 2 UE.

**3.** The UE of claim 1,
wherein a carrier aggregation (CA) based on NR operating band n257 and the NR operating band n259 is configured for the UE.

**4.** The UE of claim 3,
wherein a relaxation of 2.5 dB is applied for spherical coverage of the NR operating band n259, based on the UE being the power class 2 UE and the CA being configured,.

**5.** The UE of claim 1,
wherein the operation further comprising:

receiving a signal based on the NR operating band n259,
based on the UE being the power class 2 UE, the reference sensitivity of the NR operating band n259 being equal to:

- 88.7 dBm for a channel bandwidth (CBW) of 50 MHz,
- 85.7 dBm for a CBW of 100 MHz;
- 82.7 dBm for a CBW of 200 MHz; and
- 79.7 dBm for a CBW of 400 MHz.

**6.** The UE of claim 5,
based on the UE being the the power class 2 UE, related to Effective Isotropic Sensitivity (EIS) spherical coverage of the NR operating band n259, 60 percentile Complementary Cumulative Distribution Function (CCDF) being equal to:

- 76.2 dBm for a CBW of 50 MHz;
- 73.2 dBm for a CBW of 100 MHz;
- 70.2 dBm for a CBW of 200 MHz; and
- 67.2 dBm for a CBW of 400 MHz.

**7.** The UE of claim 6,
wherein a relaxation of 3.5 dB is applied for the EIS spherical coverage of the NR operating band n257 and the NR operating band n259, based on the UE being the Power Class 2 UE and a CA based on an NR operating band n257 and an NR operating band n259 is confiugred.

**8.** The UE of claim 1,
wherein the operation further comprising:
transmitting capability information including information related to power class 2 and/or information related to whether the UE supports CA, to the base station.

**9.** A method for performing communication, performed by a User Equipment (UE) and comprising:

transmitting a signal based on a New Radio (NR) operating band n259,
wherein the UE is a power class 2 UE, and
wherein a minimum peak Effective Isotropic Radiated Power (EIRP) for the NR operating band n259 is 25 decibel-milliwatt (dBm), based on the UE being the power class 2 UE.

**10.** A User Equipment (UE) performing communications, the UE comprising:

at least one transceiver;
at least one processor; and
at least one memory operably connectable to the at least one processor and storing instructions that, based on being executed by the at least one processor, perform operations comprising:

receiving a signal based on the NR operating band n259,

wherein the UE is a power class 2 UE, and

based on the UE being the power class 2 UE, the reference sensitivity of the NR operating band n259 being equal to:

- 88.7 dBm for a channel bandwidth (CBW) of 50 MHz;
- 85.7 dBm for a CBW of 100 MHz;
- 82.7 dBm for a CBW of 200 MHz; and
- 79.7 dBm for a CBW of 400 MHz.

11. The UE of claim 10,

based on the UE being the the power class 2 UE, related to Effective Isotropic Sensitivity (EIS) spherical coverage of the NR operating band n259, 60 percentile Complementary Cumulative Distribution Function (CCDF) being equal to:

- 76.2 dBm for a CBW of 50 MHz;
- 73.2 dBm for a CBW of 100 MHz;
- 70.2 dBm for a CBW of 200 MHz; and
- 67.2 dBm for a CBW of 400 MHz.

12. The UE of claim 11,

wherein a relaxation of 3.5 dB is applied for the EIS spherical coverage of the NR operating band n257 and the NR operating band n259, based on the UE being the Power Class 2 UE and a CA based on an NR operating band n257 and an NR operating band n259 is confiugred.

13. A method for performing communication, performed by a User Equipment (UE) and comprising:

receiving a signal based on the NR operating band n259,

wherein the UE is a power class 2 UE, and

based on the UE being the power class 2 UE, the reference sensitivity of the NR operating band n259 being equal to:

- 88.7 dBm for a channel bandwidth (CBW) of 50 MHz;
- 85.7 dBm for a CBW of 100 MHz;
- 82.7 dBm for a CBW of 200 MHz; and
- 79.7 dBm for a CBW of 400 MHz.

14. The UE of claim 1,

wherein the operation further comprising:

transmitting capability information including information related to power class 2 and/or information related to whether the UE supports CA, to the base station.

15. A method for performing communication, performed by a base station and comprising:

receiving capability information including information related to power class 2 and/or information related to whether a User Equipment (UE) supports CA, from the UE; and

transmitting to the UE a communication based on New Radio (NR) operating band n259 and/or settings related to NR operating band n257 and a CA based on the NR operating band n259, based on the capability information.

16. A base station performing communications, the base station comprising:

at least one transceiver;

at least one processor; and

at least one memory operably connectable to the at least one processor and storing instructions that, based on being executed by the at least one processor, perform operations comprising:

receiving capability information including information related to power class 2 and/or information related to whether a User Equipment (UE) supports CA, from the UE; and

transmitting to the UE a communication based on New Radio (NR) operating band n259 and/or settings related to NR operating band n257 and a CA based on the NR operating band n259, based on the capability

information.

# FIG. 1

1

EP 4 513 989 A1

# FIG. 2

EP 4 513 989 A1

# FIG. 3

100

108

106

141

142

receiver

transceiver

transmitter

Power
management
module

Battery

102

Display — 143

processor
(DSP/
micro processor)

Keypad — 144

Memory
(Flash memory,
ROM, SRAM)

SIM card

147　146

104

145

# FIG. 4

EP 4 513 989 A1

# FIG. 5

EP 4 513 989 A1

# FIG. 6

CDF of NR FR2-1 PC2 in n259

# FIG. 7

Coverage

# FIG. 8

| Transmit signal | S801 |
| Receive signal | S802 |

# FIG. 9

```
┌──────────┐                              ┌──────────────┐
│    UE    │                              │ Base station │
└────┬─────┘                              └──────┬───────┘
     │                                           │
     │         capability information            │
     │──────────────────────────────────────────>│ ⌇ S901
     │                                           │
     │              configuration                │
     │<──────────────────────────────────────────│ ⌇ S902
     │                                           │
     │                                           │
```

<div align="center">

**INTERNATIONAL SEARCH REPORT**

</div>

| | |
|---|---|
| | International application No. |
| | **PCT/KR2023/005202** |

**A.     CLASSIFICATION OF SUBJECT MATTER**

**H04W 52/36**(2009.01)i; **H04W 52/28**(2009.01)i; **H04W 8/24**(2009.01)i; **H04W 72/23**(2023.01)i; **H04L 5/00**(2006.01)i

According to International Patent Classification (IPC) or to both national classification and IPC

**B.     FIELDS SEARCHED**

Minimum documentation searched (classification system followed by classification symbols)

H04W 52/36(2009.01); H04W 52/14(2009.01); H04W 76/16(2018.01); H04W 8/24(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: n259, Effective Isotropic Radiated Power(EIRP), 파워 클래스(power class), 구형 커버리지(spherical coverage), 기준 감도(reference sensitivity), Complementary Cumulative Distribution Function(CCDF), 능력(capability), 캐리어 어그리게이션(carrier aggregation)

**C.     DOCUMENTS CONSIDERED TO BE RELEVANT**

| Category* | Citation of document, with indication, where appropriate, of the relevant passages | Relevant to claim No. |
|---|---|---|
| DY | 3GPP; TSG RAN; NR; User Equipment (UE) radio transmission and reception; Part 2: Range 2 Standalone (Release 17). 3GPP TS 38.101-2 V17.5.0. 01 April 2022.<br>      See sections 5.2A.2, 6.2A.3.1, 6.2D.1.2, 6.3.2, 6.4.1, 7.3.2.2, 7.3.4.2 and 7.3A.2.3; and tables 5.2A.2-1, 6.2D.1.2-1, 6.2D.1.2-4, 6.2D.1.3-1, 7.3.2.2-1, 7.3.4.2-1 and 7.3A.2.3-1. | 1-16 |
| Y | ONOZAWA, Hisashi (NOKIA). Email discussion summary for [99-e][112] NR_47GHz_Band. R4-2107922, 3GPP TSG-RAN WG4 Meeting # 99-e, Electronic Meeting. 27 May 2021.<br>      See section 1.1. | 1-14 |
| Y | US 2021-0321476 A1 (CHINA MOBILE COMMUNICATION CO., LTD RESEARCH INSTITUTE et al.) 14 October 2021 (2021-10-14)<br>      See claims 1, 18 and 64-65. | 8,14-16 |
| A | LG ELECTRONICS. Discussion on CBM based inter-band DL CA within same frequency group. R4-2204143, 3GPP TSG-RAN WG4 Meeting # 102-e, Electronic Meeting. 14 February 2022.<br>      See sections 2-3. | 1-16 |

☑ Further documents are listed in the continuation of Box C.     ☑ See patent family annex.

| | |
|---|---|
| *     Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **28 July 2023** | **28 July 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/005202**

**C.    DOCUMENTS CONSIDERED TO BE RELEVANT**

| Category* | Citation of document, with indication, where appropriate, of the relevant passages | Relevant to claim No. |
|---|---|---|
| A | US 2022-0070794 A1 (LG ELECTRONICS INC.) 03 March 2022 (2022-03-03)<br>See claims 1-7. | 1-16 |

Form PCT/ISA/210 (second sheet) (July 2022)

INTERNATIONAL SEARCH REPORT
Information on patent family members

International application No.

**PCT/KR2023/005202**

| Patent document cited in search report | | | Publication date (day/month/year) | Patent family member(s) | | | Publication date (day/month/year) |
|---|---|---|---|---|---|---|---|
| US | 2021-0321476 | A1 | 14 October 2021 | CN | 110831210 | A | 21 February 2020 |
| | | | | CN | 110831210 | B | 19 July 2022 |
| | | | | EP | 3836704 | A1 | 16 June 2021 |
| | | | | JP | 2021-533694 | A | 02 December 2021 |
| | | | | JP | 7122458 | B2 | 19 August 2022 |
| | | | | WO | 2020-029756 | A1 | 13 February 2020 |
| US | 2022-0070794 | A1 | 03 March 2022 | WO | 2020-166807 | A1 | 20 August 2020 |